(19) Europäisches Patentamt
European Patent Office
Office européen des brevets

(11) **EP 3 190 375 B1**

(12) **EUROPÄISCHE PATENTSCHRIFT**

(45) Veröffentlichungstag und Bekanntmachung des Hinweises auf die Patenterteilung:
**18.03.2020 Patentblatt 2020/12**

(51) Int Cl.:
*F41A 33/02* (2006.01)    *G02B 6/42* (2006.01)
*G02B 27/09* (2006.01)    *G02B 6/14* (2006.01)

(21) Anmeldenummer: **17150407.9**

(22) Anmeldetag: **05.01.2017**

(54) **LASERBASIERTER WAFFENSIMULATOR UMFASSEND EINE LASERBAUGRUPPE**

LASER-BASED WEAPON SIMULATOR COMPRISING A LASER ASSEMBLY

SIMULATEUR LASER D'ARME COMPRENANT UN MODULE LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.01.2016 DE 102016200166**

(43) Veröffentlichungstag der Anmeldung:
**12.07.2017 Patentblatt 2017/28**

(73) Patentinhaber: **Hierl, Thomas**
**90453 Nürnberg (DE)**

(72) Erfinder: **Hierl, Thomas**
**90453 Nürnberg (DE)**

(74) Vertreter: **Rau, Schneck & Hübner**
**Patentanwälte Rechtsanwälte PartGmbB**
**Königstraße 2**
**90402 Nürnberg (DE)**

(56) Entgegenhaltungen:
**EP-A1- 0 565 843     WO-A1-99/24755**
**DE-A1- 2 727 841     DE-A1-102007 018 354**
**US-A- 4 118 105      US-B1- 6 662 797**

EP 3 190 375 B1

**Beschreibung**

Die Erfindung betrifft einen laserbasierten Waffensimulator mit einer Laserbaugruppe.

Laserbasierte Waffensimulatoren sind bekannt aus der DE 27 27 841 A1 der WO 99/24755 A1. Die EP 0 565 843 A1 und die DE 10 2007 018 354 A1 offenbaren Vorrichtungen zum Einkoppeln von Licht in Lichtleitfasern. Die US 4,118,105 offenbart eine optische Kopplungseinrichtung.

Die US 6,662,797 B1 offenbart ein transparent ausgeführtes Element einer Waffe.

Laserbasierte Waffensimulatoren werden beispielsweise im Bereich des Sportschießens eingesetzt. Ein von dem Waffensimulator abgegebener Laserstrahl weist ein im Wesentlichen gaußförmiges Strahlprofil auf, wobei eine Querschnittsfläche der Laserstrahlung senkrecht zur Strahlachse einen unrunden, insbesondere stark ovalen, Querschnitt aufweisen kann. Für die Trefferermittlung beim Sportschießen ist es erforderlich, die Geometrie der Laserstrahlung und insbesondere deren Querschnittsfläche senkrecht zur Strahlachse möglichst exakt zu definieren. Sportverbände wie der DSB und die ISSF fordern eine Ortgenauigkeit von mindestens 100 $\mu$m für Auswertesysteme. Diese Genauigkeit kann mit den bislang bekannten Waffensimulatoren nicht erreicht werden. Im modernen Fünfkampf wird deshalb das Laserstrahlprofil aufgenommen und die Position des Laserspots und damit die Wertigkeit des Treffers mathematisch berechnet. Zeitliche und temperaturabhängige Störfaktoren sowie Beugungserscheinungen in der Peripherie des Kernstrahls, beispielsweise durch die Aperturen der Linsen, und/oder voneinander abweichende Leistungsmaxima bei zeitlich hintereinander abgegebener Schussfolge führen zu nicht akzeptablen Genauigkeitsabweichungen.

Ein verbessertes Strahlprofil ist mittels eines sogenannten Laserstrahlkonverters zur Erzeugung eines Flattop- oder Tophat-Profils für die Laserstrahlung möglich. Derartige Laserstrahlkonverter sind komplex aufgebaut, großbauend, haben ein hohes Eigengewicht und sind insbesondere sehr justage- und temperaturempfindlich. Derartige Laserstrahlkonverter sind für den Einsatz in Waffensimulatoren ungeeignet.

Es ist eine Aufgabe der vorliegenden Erfindung, für einen laserbasierten Waffensimulator Laserstrahlung zur Verfügung zu stellen, die ein für eine Trefferermittlung geeignetes Strahlprofil aufweist und unkompliziert zur Verfügung gestellt werden kann.

Diese Aufgabe ist erfindungsgemäß gelöst durch einen laserbasierten Waffensimulator mit den im Anspruch 1 angegebenen Merkmalen.

Erfindungsgemäß wurde erkannt, dass eine Strahlformungseinheit mit einer Lichtleitfaser, einer Einkopplungsvorrichtung und einer Homogenisierungsvorrichtung die Formung eines Flattop-Profils der Laserstrahlung ermöglicht, wobei die Strahlformungseinheit unkompliziert aufgebaut ist und insbesondere in einen laserbasierten Waffensimulator integrierbar ist. Da die Laserstrahlung ein Flattop-Profil aufweist, ist die Genauigkeit bei der Trefferermittlung erhöht. Die Laserbaugruppe weist ferner eine Laserstrahlquelle auf zum Erzeugen von Laserstrahlung. Die Laserstrahlung weist eine Wellenlänge im Bereich von 300 nm bis 2600 nm auf. Es ist auch denkbar, dass die Laserstrahlquelle Laserstrahlung mit verschiedenen, voneinander abweichenden Wellenlängen abgibt. Beispielsweise kann eine erste Wellenlänge zur Datenübertragung von dem Waffensimulator zu einer Zieleinrichtung dienen. Die Datenübertragung kann insbesondere durch Modulation der Laserstrahlung erfolgen. Eine weitere Wellenlänge der Laserstrahlung kann für den Laserschuss genutzt werden. Vorteilhaft ist es, wenn mindestens eine der abgegebenen Laserstrahlungen, insbesondere die für den Laserschuss abgegebene Laserstrahlung, im sichtbaren Spektralbereich liegt, also insbesondere eine Wellenlänge aufweist zwischen 400 nm und 700 nm. Insbesondere kann mindestens eine Laserstrahlung außerhalb des sichtbrachen Spektralbereichs liegen und insbesondere eine Wellenlänge aufweisen, die größer ist als 700 nm. Die Laserstrahlquelle ist mit der Strahlformungseinheit verbunden. Die Laserstrahlquelle ist in den Waffensimulator insbesondere integriert. Insbesondere ist die Laserbaugruppe insgesamt in einen Waffensimulator vorteilhaft integrierbar. Die Lichtleitfaser dient zur Laserstrahlführung. Die Einkopplungsvorrichtung dient zum Einkoppeln der Laserstrahlung in die Lichtleitfaser. Insbesondere ermöglicht die Einkopplungsvorrichtung, dass die Laserstrahlung lediglich bereichsweise in die Lichtleitfaser eingekoppelt wird. Insbesondere wird lediglich ein Zentralbereich der Querschnittsfläche der Laserstrahlung senkrecht zur Strahlachse in die Lichtleitfaser eingekoppelt. Der Zentralbereich ist kreisförmig. Außerhalb der Kreisfläche angeordnete Teilbereiche des ursprünglichen, von der Laserstrahlquelle erzeugten, insbesondere gaußfömigen, Strahlprofils werden abgeschnitten. Das Laserstrahlprofil weist in dem Randbereich einen im Wesentlichen senkrechten Verlauf auf. Ein senkrechter Verlauf des Laserstrahlprofils bedeutet, dass das Laserstrahlprofil einen definierten Rand aufweist. Das Laserstrahlprofil ist durch einen Laserstrahlradius vorgegeben. Innerhalb einer Kreisfläche mit dem Laserstrahlradius weist das Laserstrahlprofil eine Strahlintensität auf, die verschieden ist von Null. Außerhalb des Strahlprofils, also für Radien, die größer sind als der Laserstrahlradius, ist die Intensität im Wesentlichen Null. Das bedeutet, dass die Laserstrahlintensität außerhalb des Laserstrahlradius um mindestens eine Größenordnung kleiner ist als innerhalb des Laserstrahlradius. Die Grenze des Laserstrahlprofils ist eine Kreislinie mit dem Laserstrahlradius. An dieser Grenzlinie fällt die Intensität von dem Wert innerhalb des Laserstrahlprofils im Wesentlichen stufenförmig auf die reduzierte Laserstrahlintensität ab. Das Laserstrahlprofil weist in einem theoretischen Idealzustand einen scharfen, insbesondere sprunghaften Übergang der Laserstrahlintensität in Abhängigkeit des Laserstrahlradius auf, wobei die Laserstrahlintensität außerhalb des Laserstrahlprofils im Idealfall Null ist. In der Realität wird ein angestrebtes Tophat-Laserstrahlprofil beispielsweise aufgrund von Beugungseffekten in der oben genannten Weise davon abweichen.

Durch die Einkopplungsvorrichtung wird Laserstrahlung mit einem definierten, scharfen Rand in die Lichtleitfaser eingekoppelt. Die Strahlfläche der Laserstrahlung ist exakt definiert und unaufwendig auszuwerten. Die mittels der Einkopplungsvorrichtung eingekoppelte Laserleistung beträgt mindestens 10 %, insbesondere mindestens 25 % und insbesondere etwa 50 % der Leistung der Laserstrahlung der Laserstrahlquelle. Die reduzierte, eingekoppelte Laserleistung kann, insbesondere gegenüber aus dem Stand der Technik bekannten Waffensimulatoren, dadurch kompensiert werden, dass eine Laserstrahlquelle mit höherer Leistung eingesetzt wird. Die von der Laserstrahlquelle über die Strahlformungseinheit emittierte Laserstrahlung weist eine für den Einsatz des Waffensimulators als Sportwaffe ausreichende Ausgangsleistung auf, die insbesondere mindestens 2,0 mW, insbesondere mindestens 2,3 mW und insbesondere 2,5 mW beträgt. Die von dem laserbasierten Waffensimulator abgegebene Laserstrahlleistung beträgt insbesondere höchstens 5 mW, insbesondere höchstens 10 mW, insbesondere höchstens 15 mW und insbesondere höchstens 20 mW. Der laserbasierte Waffensimulator fällt in die Laserschutzklasse 1 oder 2.

Innerhalb der klar definierten Querschnittsfläche der Laserstrahlung erfolgt eine Homogenisierung des Intensitätsprofils der Laserstrahlung mittels der Homogenisierungsvorrichtung. Dadurch wird erreicht, dass die Intensität der Laserstrahlung über den Laserstrahlradius gleichmäßig verteilt ist. Insbesondere ist es nicht erforderlich, dass die Homogenisierungsvorrichtung als komplexer Laserstrahlkonverter ausgeführt sein muss. Die Homogenisierungsvorrichtung ist kleinbauend und mit reduziertem Eigengewicht ausgeführt. Die Homogenisierungsvorrichtung kann unmittelbar in den laserbasierten Waffensimulator integriert werden.

Als Waffensimulator im Sinne der Erfindung ist eine Vorrichtung zu verstehen, deren äußere Erscheinung an Handfeuerwaffen, beispielsweise Pistolen, insbesondere Druckluftpistolen, oder Gewehren, insbesondere Druckluftgewehren, angelehnt ist. Zur Simulation der Schussabgabe werden Laserstrahlpulse mit einer Pulsdauer von typischerweise zwischen 30 ns und 100 ms abgegeben. Die Laserstrahlpulse weisen einen zeitlichen Abstand von mindestens 10 ms auf. Ein Laserpuls symbolisiert einen Schuss einer Handfeuerwaffe. Durch Modulation der Laserleistung bei hoher Frequenz können die Laserstrahlpulse in Subpulse mit reduzierter Pulsdauer von beispielsweise 1 ns bis 100 ms aufgeteilt werden.

Ein laserbasierter Waffensimulator mit der Laserbaugruppe weist im Wesentlichen die Vorteile der Laserbaugruppe auf, worauf hiermit verwiesen wird.

Im Folgenden aus dem Waffenbereich verwendete Begriffe wie Pistole und/oder Gewehr, Lauf, Griff, Griffstück, Abzug, Mündung, Spannhebel, Ladehebel, Verschluss oder andere sind nicht als Waffen oder deren Teile im waffenrechtlichen Sinn für Feuerwaffen oder Druckluftwaffen zu verstehen. Sie bezeichnen formanaloge und/oder lageanaloge Komponenten des laserbasierten Waffensimulators und vereinfachen das Verständnis.

Die Lichtleitfaser ist eine Monomode-Faser. Der Kerndurchmesser der Monomode-Faser ist kleiner als 10 μm, insbesondere kleiner als 8 μm, insbesondere kleiner als 6 μm und beträgt insbesondere höchstens 4 μm.

Eine asphärische Linse als Einkopplungsvorrichtung gemäß Anspruch 2 ist unkompliziert ausgeführt. Die asphärische Linse kann unmittelbar in den laserbasierten Waffensimulator integriert werden. Es sind auch andere Einkopplungsvorrichtungen denkbar, wie beispielsweise eine Lichtleitfaser, deren Faserende eine nicht ebene Fläche senkrecht zur Faserachse aufweist. Insbesondere weist die Lichtleitfaser am Faserende eine optisch wirksame, radial symmetrische Freiformfläche auf. Die optisch wirksame Freiformfläche kann beispielsweise durch Ätzen und/oder mikromechanische Bearbeitung angeschliffen werden. Anstelle der asphärischen Linse kann auch eine sphärische Linse als Einkopplungsvorrichtung verwendet werden.

Eine Projektionsoptik gemäß Anspruch 3 ermöglicht eine Anpassung, insbesondere eine Fokussierung der Laserstrahlung auf eine erforderliche Zielentfernung. Die Laserbaugruppe kann für einen laserbasierten Waffensimulator genutzt werden, der flexibel auf unterschiedliche Wettkampfdistanzen einstellbar ist. Dazu dient insbesondere eine veränderlich einstellbare Brennweite der Projektionsoptik. Darüber hinaus ermöglicht die Projektionsoptik eine Veränderung des Laserstrahlradius senkrecht zur Strahlachse. Es können verschiedenen Kalibergrößen durch Einstellen verschiedener Laserstrahldurchmesser abgebildet werden.

Eine Laserstrahlquelle gemäß Anspruch 4 kann vorteilhaft in den Waffensimulator integriert werden.

Eine Homogenisierungsvorrichtung gemäß Anspruch 5 ist besonders unkompliziert ausgeführt. Es wurde erkannt, dass eine Homogenisierung der Laserstrahlung durch die Lichtleitfaser selbst erreicht werden kann, wenn diese in einer gewickelten Anordnung, insbesondere an einem Wickelelement, angeordnet ist. Die Lichtleitfaser ist mechanisch flexibel. Die Lichtleitfaser ist elastisch in einer Richtung senkrecht zur Faserlängsachse biegsam. Dadurch ist das Aufwickeln der Lichtleitfaser verbessert. Das Wickelelement kann als Wickelkern ausgeführt sein, um den herum die Lichtleitfaser gewickelt ist. Das Wickelelement kann alternativ als Wickelhülse ausgeführt sein, in der die Lichtleitfaser innenliegend gewickelt angeordnet ist. Der Erkenntnis, dass die gewickelte Lichtleitfaser an dem Wickelelement zur Homogenisierung der Laserstrahlung genutzt werden kann, liegt zugrunde, dass unterschiedliche Laserstrahlmoden, insbesondere transversalen elektromagnetischen Moden (TEM) miteinander gemischt werden können, während sich die Laserstrahlung entlang der Lichtleitfaser ausbreitet. Die gewickelte Lichtleitfaser ermöglicht also den Energieaustausch zwischen den verschiedenen Laserstrahlmoden innerhalb der Lichtleitfaser. Die Ausbreitungsbedingungen für die einzelnen Laserstrahlmoden werden gezielt homogenisiert. Am Austrittsende der Lichtleitfaser liegt eine homogene Intensitätsverteilung aufgrund der Laserstrahlmodenmischung, also der Homogenisierung, vor. Die gewickelte Lichtleitfaser ist Teil der Homogenisierungsvorrichtung. Es ist auch möglich, die Lichtleitfaser beispielsweise in einem vorgelagerten Fertigungsschritt zu wickeln, in der gewickelten Anordnung zu stabilisieren, beispielsweise indem benachbarte Windungen der Wicklung miteinander fixiert werden, insbesondere geklebt werden, sodass die gewickelte Lichtleitfaser eine eigenständige, selbsttragende Struktur, insbesondere in Form einer Helixwicklung aufweist. In diesem Fall ist ein Wickelelement für die Laserbaugruppe entbehrlich. Ein innerer Zylinderradius des Wickelelements muss mindestens so groß sein wie der zulässige Biegeradius der Lichtleitfaser, um die Lichtführungseigenschaft der Lichtleitfaser nicht zu unterbinden. Zudem sollte der Zylinderradius nicht wesentlich größer sein als das Zehnfache des Biegeradius der Lichtleitfaser, um eine hinreichende Effizienz der Modenmischung zu erreichen. In der gewickelten Anordnung weist die Lichtleitfaser Mikrobiegungen auf. Es wurde erkannt, dass diese Mikrobiegungen als Streuzentren für die Laserstrahlung genutzt werden können. An den Streuzentren können die einzelnen, in der Lichtleitfaser ausbreitungsfähigen Laserstrahlmoden Energie austauschen. Die Mischung der Laserstrahlmoden ist besonders effektiv. Es wurde zudem erkannt, dass die durch die Mischung der Laserstrahlmoden verursachte Dämpfung der Laserstrahlung deren Eignung für einen laserbasierten Waffensimulator nicht ausschließt. Die Lichtleitfaser weist eine Mindestlänge von 10 cm auf. Insbesondere beträgt die Mindestlänge mindestens 20 cm, insbesondere mindestens 40 cm, insbesondere mindestens 60 cm, insbesondere mindestens 80 cm, insbesondere mindestens 90 cm und insbesondere mindestens 100 cm. Es ist gewährleistet, dass entlang der Lichtleitfaser eine ausreichende Homogenisierung der Laserstrahlmoden erfolgt.

Alternativ zu der gewickelten Anordnung der Lichtleitfaser kann zur Mischung der einzelnen Laserstrahlmoden auch ein sogenannter Modenmischer, wie er von dem Unternehmen Newport beispielweise mit der Bezeichnung FM-1 vertrieben wird, genutzt werden. Der Modenmischer erzwingt Mikrobiegungen in der Lichtleitfaser und damit die vorstehend erläuterte Mischung der Laserstrahlmoden.

Eine Befestigung der Lichtleitfaser gemäß Anspruch 6 garantiert eine robuste Ausführung der Homogenisierungsvorrichtung.

Eine transparente Ausführung des Wickelelements gemäß Anspruch 7 ermöglicht die Unterdrückung eines Waffenanscheins. Insbesondere ist die auf das Wickelelement aufgewickelte Lichtleitfaser für einen Betrachter mit einer Blickrichtung senkrecht oder parallel zur Achse der Wicklung im Wesentlichen und insbesondere vollständig durchsichtig. Dazu ist die Lichtleitfaser als Kreiswicklung oder als Helixwicklung um das Wickelelement ausgeführt. Die Lichtleitfaser ist schraubenlinienförmig gewickelt. Insbesondere weisen die einzelnen Wicklungen der Lichtleitfaser zueinander einen derart großen Abstand auf, dass die gesamte Baugruppe, also das Wickelelement mit der aufgewickelten Lichtleitfaser, als nahezu transparent wahrgenommen wird. Die einzelnen Wicklungen sind entlang der Längsachse des Wickelelements mit einem von 0 verschiedenem Abstand angeordnet. Es ist auch denkbar, dass das Wickelelement aus nicht-transparentem Material ausgeführt ist. Es ist denkbar, entlang eines Axialabstands der Strahlachse von etwa 1 mm etwa eine Wicklung auf das Wickelelement anzubringen. Insbesondere ist eine Wicklung umso dichter möglich, je dünner eine Ummantelung der Lichtleitfaser ausgeführt ist. Eine vergleichsweise dünne Ausführung der Lichtleitfaser mit Ummantelung ist beispielsweise bei einem Außendurchmesser von 125 $\mu$m gegeben. Es sind auch Lichtleitfaser mit robuster und vergleichsweise dicker Ummantelung denkbar, die beispielsweise einen Außendurchmesser von 3,5 mm aufweisen.

Eine Wicklung der Lichtleitfaser gemäß Anspruch 8 ermöglicht eine zusätzliche Reduzierung der Baugröße. Dadurch ist es möglich, die aufgewickelte Lichtleitfaser beispielsweise in einen Lauf eines Kleinkaliber-Match-Gewehres zu integrieren, dessen Außenradius höchstens 12 mm beträgt, wobei ein typischer Minimalbiegeradius einer Lichtleitfaser etwa 20 mm beträgt. Aufgrund einer schraubenlinienförmigen Wicklung mit einem Steigungswinkel kann ein Innenradius der Wicklung realisiert werden, der kleiner ist als der minimale Biegeradius der Lichtleitfaser. Die Lichtführungseigenschaft der Lichtleitfaser bleibt erhalten, da der Steigungswinkel der schraubenlinienförmigen Wicklung zu einer Erhöhung eines effektiven Biegeradius der Lichtleitfaser führt. Die Steigung der schraubenlinienförmigen Wicklung ergibt sich aus dem Verhältnis der Höhe einer einzigen Wicklung und dem Umfang der Zylinderwicklung. Der effektive Biegeradius der Lichtleitfaser vergrößert sich proportional zu $\sqrt{1 + k^2}$, wobei k die Steigung ist.

Erfindungsgemäß wurde also erkannt, dass in Abhängigkeit des Steigungswinkels der schraubenlinienförmigen Wicklung ein effektiver Biegeradius eingestellt werden kann, der größer ist als der minimale Biegeradius.

Damit kann die Homogenisierungsvorrichtung mit der gewickelten Lichtleitfaser besonders kleinbauend in einen laserbasierten Waffensimulator integriert werden.

Vorteilhaft ist es, wenn Maßnahmen zur Erhöhung der Sicherheit der Laserbaugruppe vorgesehen sind, da die mittels der Laserstrahlquelle abgegebene Laserleistung Werte aufweisen kann, die Grenzwerte für die Laserklassen 1 und 2 überschreiten. Sicherungsmaßnahmen sind erforderlich, um beispielsweise bei einem Fehler wie beispielsweise einem Faserbruch nahe der Einkopplungsvorrichtung zu gewährleisten, dass Laserstrahlung nicht austritt. Dies gilt insbesondere auch für einen Service- oder Reparaturfall.

Ein Schutzmantel um die Lichtleitfaser gemäß Anspruch 9 gewährleistet eine höhere Sicherheit für die Laserbaugruppe und insbesondere den laserbasierten Waffensimulator. Insbesondere erstreckt sich der Schutzmantel entlang einer Mindestlänge, die insbesondere mindestens 50 mm ab der Einkoppelfläche in die Lichtleitfaser beträgt. Die Ummantelung ist insbesondere strahlungsdicht und insbesondere bruchsicher ausgeführt. Die Ummantelung ist insbesondere aus einem Verbundmaterial hergestellt. Eine robuste Ummantelung ist beispielsweise aus opakem, elastischem Material ausgeführt. Derartige Materialien sind im Wesentlichen unkaputtbar und können insbesondere manuell nicht gebrochen werden.

Ein Schutzschalter gemäß Anspruch 10 gewährleistet eine weitere Sicherungsmaßnahme. Der Schutzschalter dient zum Unterbrechen der Energiezufuhr von der Energiequelle zur Laserstrahlquelle, insbesondere beim Öffnen des Grundkörpers des Waffensimulators.

Eine Selbstzerstörungsvorrichtung gemäß Anspruch 11 ermöglicht eine gezielte Zerstörung der Laserstrahlquelle durch einen Überspannungspuls bei Eintreten einer, insbesondere definierten und überprüfbaren Fehlfunktion der Laserstrahlquelle. Eine derartige Fehlfunktion liegt beispielsweise dann vor, wenn am optischen Ausgang einer abgesetzten Monitordiode kein Signal gemeldet wird, obwohl die Laserstrahlquelle, insbesondere die Laserdiode, betrieben wird. Das fehlende Signal kann zum Auslösen der Selbstzerstörungsvorrichtung genutzt werden. Die Monitordiode kann beispielsweise exzentrisch zu der Strahlachse, insbesondere unterhalb der Strahlachse, der Laserstrahlung angeordnet sein. Entlang der Strahlachse kann vor einem Kollimator ein Schutzglas angebracht werden. Das Schutzglas ist insbesondere nicht vollkommen antireflex vergütet, sodass die auf das Schutzglas auftreffende Laserstrahlung zumindest anteilig reflektiert wird. Das Schutzglas ist mit einem Neigungswinkel, der von 90° verschieden ist, gegenüber der Strahlachse der Laserstrahlung angeordnet. Der Anteil der von dem Schutzglas reflektierten Laserstrahlung trifft auf die Monitordiode. Die Monitordiode ist entlang der Laserstrahlung insbesondere zwischen dem Kollimator und dem Schutzglas angeordnet.

Eine unlösbare Verbindung von Laserstrahlquelle und Strahlformungseinheit gemäß Anspruch 12 gewährleistet Schutz davor, dass die beiden Komponenten nicht unbeabsichtigt voneinander getrennt werden. Unlösbar bedeutet, dass die Laserstrahlquelle und die Strahlformungseinheit ausschließlich mittels eines Spezialwerkzeugs oder durch Zerstörung voneinander getrennt werden können. Die Laserbaugruppe ist gekapselt. Beispielsweise kann die Laserstrahlquelle mit der Strahlformungseinheit verschweißt, verlötet oder verklebt sein.

Eine Trennschutzvorrichtung gemäß Anspruch 13 gewährleistet einen Schutz der Verbindung von Laserstrahlquelle mit Strahlformungseinheit gegen unbeabsichtigtes Trennen. Die Trennschutzvorrichtung ist insbesondere eine mechanische Schutzvorrichtung. Die mechanische Trennschutzvorrichtung kann insbesondere derart ausgeführt sein, dass bei einer Öffnung der Trennschutzvorrichtung die Laserstrahlquelle zerstört wird.

Aufgrund mindestens einer der Schutzmaßnahmen gemäß einem der Ansprüche 9 bis 13 kann die Laserbaugruppe in den Laserschutzverordnungen für die Klassen 1 und 2 gruppiert werden. Die Sicherheitsvorschriften für einen laserbasierten Waffensimulator mit der erfindungsgemäßen Laserbaugruppe sind vergleichbar mit den bislang verwendeten Waffensimulatoren.

Insbesondere weist der laserbasierte Waffensimulator einen Grundkörper auf, der zumindest bereichsweise und insbesondere im Bereich eines Laufs, transparent ausgeführt ist. Insbesondere ist der transparent ausgeführte Bereich des Laufs um die transparente Wicklung der Lichtleitfaser angeordnet. Für einen Betrachter ist auch aus größerer Entfernung und insbesondere auf den ersten Blick erkennbar, dass der Waffensimulator keine reale Waffe ist. Der Waffensimulator unterliegt damit nicht den im deutschen Waffenrecht definierten Anscheinswaffen. Transport- und Handhabungsbeschränkungen sind für den laserbasierten Waffensimulator nicht bindend.

Eine Anordnung der Strahlformungseinheit im Waffensimulator gemäß Anspruch 15 ermöglicht eine vereinfachte Demontage des Waffensimulators. Insbesondere kann die Laserbaugruppe vom Waffensimulator demontiert werden. Die Demontage und erneute Montage kann insbesondere innerhalb von höchstens 120s, höchstens 60s und insbesondere höchstens 30s erfolgen. Das bedeutet, dass der Lauf auch eine dekorative Funktion aufweist und unkompliziert, insbesondere hinsichtlich der Funktionsweise des Waffensimulators, demontiert werden kann. Der Lauf dient insbesondere zum Festlegen des Korns und/oder anderen Zielvorrichtungen. Die Zielvorrichtungen sind für die Visierung eines Ziels mit dem Waffensimulator unerlässlich. Dazu weist der Lauf insbesondere Verbindungselemente auf, die mit Verbindungsgegenelementen des Waffensimulators korrespondieren, dass Demontage und Remontage fehleranfällig, schnell, unkompliziert und reproduzierbar durchführbar ist. Insbesondere soll Demontage und Remontage des laserbasierten Waffensimulators derart möglich sein, dass ein anschließendes Justieren des Waffensimulators entbehrlich ist.

Insbesondere ist die Laserbaugruppe vollständig entlang der Laserstrahlachse am Waffensimulator im Wesentlichen oberhalb der Auslöseeinheit angeordnet.

Ein Ausführungsbeispiel der Erfindung wird nachfolgend anhand der Zeichnung näher erläutert. In dieser zeigen:

Fig. 1      eine schematische Seitenansicht eines laserbasierten Waffensimulators gemäß der Erfindung in Form einer Laserpistole,

Fig. 2      eine weitere schematische Seitenansicht der Laserpistole gemäß Fig. 1,

Fig. 3      eine vergrößerte Draufsicht auf die Laserpistole gemäß Fig. 1,

Fig. 4      eine vergrößerte schematische Detailansicht einer selbstspannenden mechanischen Abzugseinheit der Laserpistole gemäß Fig. 1,

Fig. 5      die Anwendung der Laserpistole in einer Ladeposition,

Fig. 6      eine Fig. 5 entsprechende Darstellung der Handhabung der Laserpistole in einer Schussposition,

Fig. 7 bis 9      schematische Intensitätsverteilungen eines von einer Laserstrahlquelle emittierten Laserstrahls und

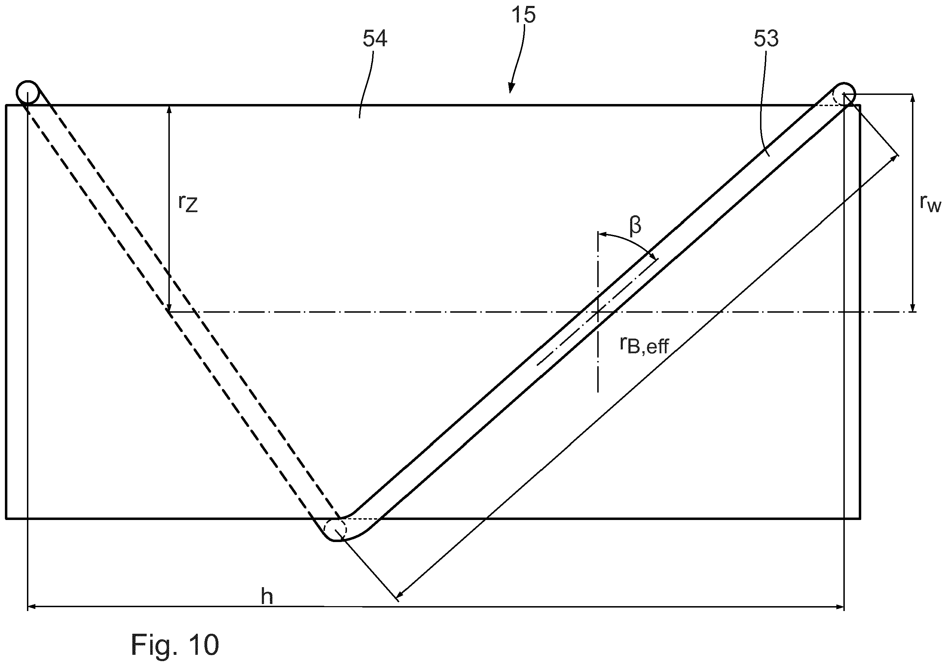

Fig. 10      eine schematische Darstellung einer Strahlformungseinheit.

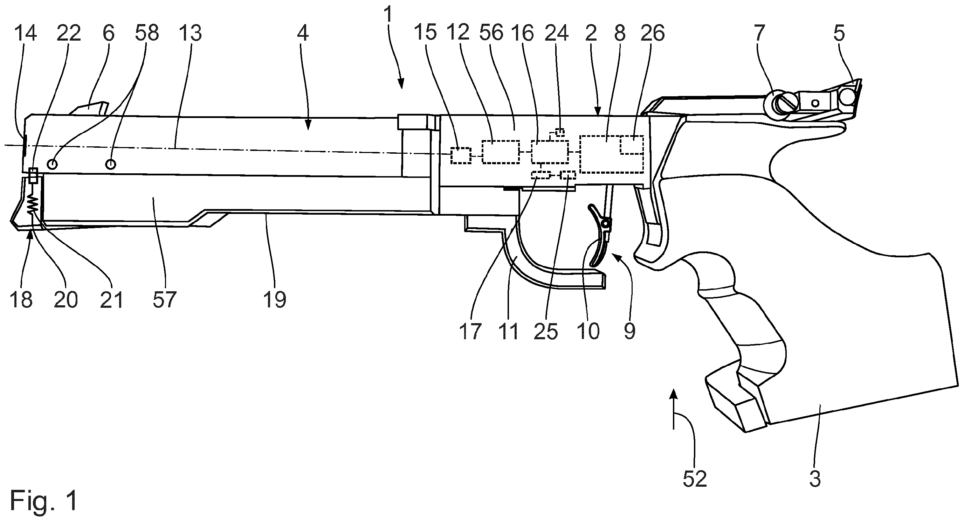

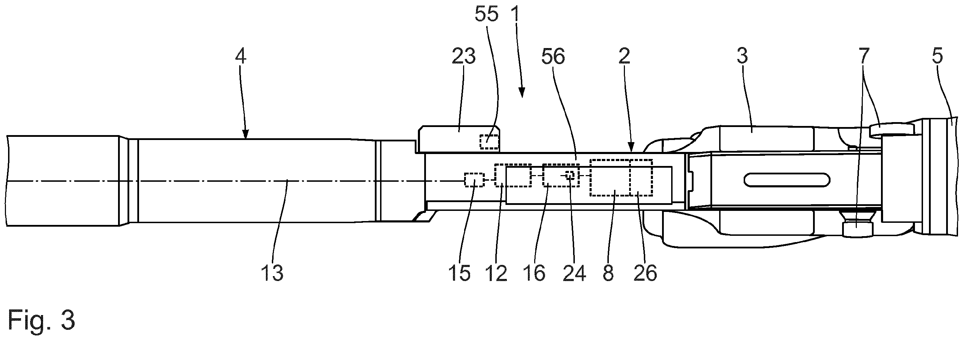

Ein in Fig. 1 bis 4 dargestellter laserbasierter Waffensimulator 1 ist in Form einer Laserpistole ausgeführt. Der Waffensimulator 1 weist einen Grundkörper 2 auf, der mit seiner äußeren Erscheinungsform dem einer handelsüblichen Pistole entspricht. Der Waffensimulator 1 kann auch als Gewehr oder in Form einer anderen Waffe ausgeführt sein. Die Ausgestaltung des Grundkörpers 2 ist im Wesentlichen beliebig möglich. Der Grundkörper 2 umfasst im Wesentlichen ein Griffelement 3 in Form eines Handgriffs sowie einen mit dem Griffelement 3 lösbar verbundenen Lauf 4. Zwischen dem Griffelement 3 und dem Lauf 4 ist ein Mittelteil 56 vorgesehen. In dem Mittelteil 56 sind wesentliche Funktionskomponenten des Waffensimulators 1 angeordnet. Das Griffelement 3, der Lauf 4 und das dazwischen angeordnete Mittelteil 56 bilden den Grundkörper 2. An einer Oberseite des Grundkörpers 2 sind Kimme 5 und Korn 6 vorgesehen. Die Kimme 5 ist an einer Oberseite des Grundkörpers 2, insbesondere oberhalb des Griffelements 3, angeordnet. Das Korn 6 ist an einer Oberseite des Laufs 4 angeordnet. Die Kimme 5 und das Korn 6 bilden eine optische Zielerfassungseinheit. Die Kimme 5 ist mittels Verstellrädern 7 zur Seitenkorrektur und zur Höhenkorrektur eines Schusses veränderlich einstellbar. Die Seiten- und Höhenkorrektur ermöglichen also im Wesentlichen eine horizontale bzw. vertikale Feinjustage für den Waffensimulator 1. Die Höhenkorrektur entspricht der Entfernungskorrektur bei einer realen Waffe, bei der ein Projektil aufgrund der Schwerkraft eine im Wesentlichen parabelförmige absinkende Flugbahn aufweist. Bei dem laserbasierten Waffensimulator 1 ist die Schwerkraft für den Laserschuss unerheblich. Die Höhenkorrektur dient zum Einstellen einer Höhenposition, also einer Vertikalposition des Laserstrahls auf einem Ziel, insbesondere auf einer Zielscheibe, insbesondere unabhängig von der Zielentfernung.

Unterhalb des Laufs 4 ist ein Laufunterzug 57 angeordnet. Der Laufunterzug 57 ist Bestandteil des Grundkörpers 2. Der Laufunterzug 57 ist insbesondere fest und insbesondere nicht abnehmbar mit dem Mittelteil 56 verbunden. Der Lauf 4 ist abnehmbar und insbesondere lösbar auf den Laufunterzug 57 aufgesetzt. Der Lauf 4 kann mit dem Laufunterzug 57 auch unlösbar, insbesondere einteilig, verbunden sein. Der Lauf 4 kann mit dem Mittelteil 56 fest und insbesondere unlösbar verbunden sein. Insbesondere ist es denkbar, dass der Grundkörper 2 einteilig ausgeführt ist. Der Waffensimulator 1 weist eine selbstspannende Abzugseinheit 8 auf. Die Abzugseinheit 8 ist eine mechanische Abzugseinheit. Die Abzugseinheit 8 ist im Mittelteil 56, also im Grundkörper 2, integriert. Im Zustand der Schussbereitschaft wird ein Laserschuss von dem Waffensimulator 1 durch eine Auslöseeinheit 9 ausgelöst. Die Auslöseeinheit 9 ist mit der Abzugseinheit 8 in Signalverbindung. Insbesondere ist die Auslöseeinheit 9 mit der Abzugseinheit 8 mechanisch starr gekoppelt.

Gemäß dem gezeigten Ausführungsbeispiel weist die Auslöseeinheit 9 einen Abzugszüngel 10 auf, der mechanisch an die Abzugseinheit 8 gekoppelt ist. Der Abzugszüngel 10 ist durch einen an einem Laufunterzug 57 befestigten Schutzbügel 11 gegen unbeabsichtigtes Auslösen und/oder Beschädigung geschützt. Der Schutzbügel 11 kann auch an einer Unterseite des Mittelteils 56 angeordnet sein. Der Abzugszüngel 10 ist an einer Unterseite des Mittelteils 56 angeordnet. Der Abzugszüngel 10 ist benachbart zu dem Griffelement 3 angeordnet. Der Abzugszüngel 10 kann beispielsweise mit dem Zeigefinger betätigt werden, während der Waffensimulator 1 am Griffelement 3 gehalten wird. Die Auslöseeinheit 9 erzeugt ein Auslösesignal für eine Laserstrahlquelle 12, die in Fig. 1 bis 3 rein schematisch dargestellt ist.

Die Laserstrahlquelle 12 erzeugt einen gepulsten Laserstrahl, der sich entlang einer Strahlachse 13 entlang des Laufs 4 ausbreitet und aus diesem durch eine Mündung 14 austritt. Der Lauf 4 ist im Wesentlichen hohlprofilförmig ausgeführt und weist einen inneren, insbesondere zylinderförmigen, Hohlraum mit einer Lauflängsachse auf. Es kann vorteilhaft sein, wenn die Lauflängsachse gegenüber der Strahlachse 13 mit einem von 0 verschiedenen Neigungswinkel angeordnet ist. Der Neigungswinkel kann in Abhängigkeit der Zielentfernung eingestellt sein. Dadurch ist es vorteilhaft möglich, Visierbaugruppen, insbesondere Kimme 5 und Korn 6 zu verwenden, die üblicherweise bei realen Schusswaffen eingesetzt werden. Dadurch ergibt sich ein Kostenvorteil. Der Neigungswinkel zwischen Strahlachse 13 und Lauflängsachse kann beispielsweise dadurch eingestellt werden, dass eine Strahlformungseinheit 15 gegenüber der Lauflängsachse geneigt angeordnet ist. Der Neigungswinkel beträgt insbesondere wenige Grad und insbesondere höchstens 1° und ist derart eingestellt, dass eine Winkelabweichung zwischen der Strahlachse 13 und der Lauflängsachse vorliegt. Die Achsen sind jedoch im Wesentlichen parallel zueinander angeordnet. Mit der Laserstrahlquelle 12 ist eine Strahlformungseinheit 15 angeschlossen, damit der von dem Waffensimulator 1 emittierte Laserpuls ein möglichst homogenes Intensitätsprofil in Abhängigkeit des Strahlradius aufweist und insbesondere einen scharfen Intensitätsübergang in Abhängigkeit vom Radius aufweist. Die Strahlformungseinheit 15 ist im Grundkörper 2 integriert. Die Laserstrahlquelle 12 ist im Grundkörper 2 integriert. Die Strahlformungseinheit 15 ist insbesondere im Mittelteil 56 integriert angeordnet. Die Laserstrahlquelle 12 ist insbesondere im Mittelteil 56 integriert angeordnet. Die Strahlformungseinheit 15 kann auch im Lauf 4, im Laufunterzug 57 oder im Griffstück 3 angeordnet sein. Die Laserstrahlquelle 12 kann auch im Lauf 4, im Laufunterzug 57 oder im Griffstück 3 angeordnet sein. Die Laserstrahlquelle 12 ist insbesondere oberhalb der Auslöseeinheit 9 im Grundkörper angeordnet. Die Laserstrahlquelle ist insbesondere benachbart zur Abzugseinheit 8 angeordnet. Die Strahlformungseinheit 15 ist im Wesentlichen oberhalb der Abzugseinheit 8 und benachbart zur Laserstrahlquelle 12 angeordnet. Die Laserstrahlquelle 12 ist im Wesentlichen zwischen der Abzugseinheit 8 und der Strahlformungseinheit 15 angeordnet. Die Laserstrahlquelle 12 und Strahlformungseinheit 15 bilden eine Laserbaugruppe.

Der Waffensimulator 1 weist eine Energiequelle 16 in Form einer Batterie und/oder eines Akkumulators auf. Die Energiequelle 16 ist im Grundkörper 2 integriert und ist insbesondere mit der Abzugseinheit 8 in Signalverbindung. Die Energiequelle 16 ist insbesondere im Laufunterzug 57 oder im Lauf 4 integriert. Die Energiequelle 16 kann auch im Mittelteil 56 integriert sein. Es ist auch denkbar, die Energiequelle 16 im Griffelement 3 zu integrieren. In Analogie zu einem Wechselmagazin im Pistolengriff ist eine Schnellwechselvorrichtung für die Energiequelle 16 denkbar. Eine derart ausgeführte Energiequelle 16 könnte als schnellwechselbare Batterie oder schnellwechselbarer Akkumulator beispielsweise auch von unten in den Laufunterzug 57 oder in den Lauf 4, insbesondere entlang der Strahlachse 13, ausgehend von der Laserstrahlquelle 12 entlang der Strahlausbreitungsrichtung nach der Abzugseinheit 8, steckbar angeordnet sein. Insbesondere solange die Visierung mit dem Waffensimulator 1 nicht beeinträchtigt wird, ist es denkbar, dass die Energiequelle 16 an dem Grundkörper 2 vorsteht, beispielsweise aus dem Laufunterzug 57 nach unten und/oder seitlich. Die Energiequelle 16 kann in Analogie eines Magazins einer Schnellfeuer- und/oder Maschinenpistole ausgeführt sein. Die Energiequelle 16 ist zur Energieübertragung mit der Laserstrahlquelle 12 verbunden.

Der Waffensimulator 1 weist eine im Grundkörper 2 integrierte Steuerungseinheit 17 auf. Die Steuerungseinheit 17 ist insbesondere im Mittelteil 56 integriert angeordnet. Die Steuerungseinheit 17 weist insbesondere eine Steuerungsplatine auf, an der ein Mikroprozessor angeordnet ist. Die Steuerungseinheit steht mit verschiedenen Komponenten des Waffensimulators 1 in Signalverbindung, wobei nicht jede Signalverbindung in den Figuren zeichnerisch dargestellt ist. Die Signalverbindungen können kabelgebunden oder kabellos aufgeführt sein. Im Bereich der Mündung 14 ist eine Bereitschafts-Schalteinheit 18 angeordnet. Die Bereitschafts-Schalteinheit 18 ist im Wesentlichen bündig mit der Stirnseite des Laufs 4, an dem die Mündung 14 vorgesehen ist, angeordnet. Es ist denkbar, dass die Bereitschafts-Schalteinheit 18 auch an einer Unterseite des Griffs 4 angeordnet ist. Die Bereitschafts-Schalteinheit 18 ist an einer Unterseite 19 des Laufs 4 angeordnet. Die Bereitschafts-Schalteinheit 18 ist an einer Außenseite des Grundkörpers 2 angeordnet. Die Bereitschafts-Schalteinheit 18 weist ein Sensorelement in Form eines Ladehebels 20 auf, der mittels einer Druckfeder 21 am Grundkörper 2 federgelagert gehalten und mit einem elektrischen Schalter 22 verbunden ist. Der Ladehebel 20 ist entlang einer radial zur Längsachse 13 orientierten Betätigungsrichtung 52 betätigbar. Der gemäß dem gezeigten Ausführungsbeispiel erforderliche Betätigungsweg entlang der Betätigungsrichtung 52 beträgt wenige Millimeter, insbesondere höchstens 3 mm.

Die Steuerungseinheit 17 weist ein nicht dargestelltes Verzögerungsmodul auf. Das Verzögerungsmodul erzeugt ein Zeitverzögerungs-Signal, das an die Laserstrahlquelle 12 zum Aktivieren des Laserstrahlschusses übermittelt wird. Das Verzögerungsmodul ermöglicht eine Verzögerungszeit, die beispielsweise in einem Bereich zwischen 1,5 ms und 15 ms liegen kann. Dieses Zeitintervall entspricht einer Schussverzögerungszeit bei realen Handfeuerwaffen. Die Schussverzögerungszeit wird auch als barrel time bezeichnet. Vorteilhaft ist es, wenn die Verzögerungszeit an der Steuerungseinheit 17 veränderlich, insbesondere individuell durch den Schützen, festlegbar ist. Die Verzögerungszeit kann auch kleiner als 1,5 ms oder größer als 15 ms sein. Die Verzögerungszeit definiert den Zeitraum zwischen dem Auslösen des Abzugs und dem Aussenden des schusspositionsbestimmenden Laserpulses. Die Verzögerungszeit kann insbesondere elektronisch bedingte Verzögerungsintervalle, die insbesondere nach dem Einschalten des Laserpulses auftreten können, beinhalten. Elektronische Verzögerungsintervalle treten beispielsweise aufgrund von RC-Zeitkonstanten auf. Die Verzögerungszeit ist unmittelbar und insbesondere unkompliziert messbar. Der schusspositionsbestimmende Laserpuls dient zur Erfassung der Schussposition auf einem Zielobjekt, insbesondere einer Zielscheibe.

Vorteilhaft ist es, wenn das Sensorelement innerhalb eines virtuellen Zylindervolumens um die Strahlachse 13 angeordnet ist. Das bedeutet, dass gemäß dem gezeigten Ausführungsbeispiel eine untere Außenkante des Ladehebels 20, die entlang und senkrecht zur Strahlachse 13 vorsteht, als äußerer Rand des Sensorelements kleiner sein muss als der Radius des Zylindervolumens. Der Radius beträgt insbesondere höchstens 15 cm. Das Zylindervolumen entspricht dem verlängerten, ausgestreckten Arm.

Der Lauf 4 ist entlang der Strahlachse 13 zumindest abschnittsweise aus einem transparenten Material, insbesondere aus transparentem Kunststoff, hergestellt und/oder durch unmittelbar öffenbare Klappelemente einsehbar ausgeführt. Der Lauf 4 kann auch dadurch einsehbar ausgeführt sein, dass die äußere Wandung Durchbrüche beispielsweise durch Bohrungen und/oder langlochförmige Ausfräsungen aufweist. Ein derart ausgeführter Lauf 4 kann dann auch aus nicht-transparentem Material, insbesondere nicht-transparentem Kunststoff und/oder Metall, ausgeführt sein. Die einsehbare Ausführung des Laufs 4 bewirkt, dass in dem Lauf 4 angeordnete Komponenten, insbesondere aus größerer Entfernung, insbesondere aus mehreren Metern, insbesondere aus mindestens 2 m oder mehr, unmittelbar sichtbar sind. Damit ist vermieden, dass der Waffensimulator 1 unter die nach deutschem Waffenrecht definierten Anscheinswaffen fällt. Der Waffensimulator 1 ist offensichtlich keine reale Waffe. Dadurch ergeben sich insbesondere Erleichterungen hinsichtlich des Transports und der Handhabung des Waffensimulators 1. Insbesondere die Mitnahme des Waffensimulators 1 auf Flugreisen oder die Aufbewahrung im Hausgebrauch ist dadurch wesentlich vereinfacht.

Der Waffenanschein kann auch dadurch verhindert werden, dass der Lauf 4, insbesondere entlang der Strahlachse 13 in Laserstrahlrichtung nach der Strahlformungseinheit 15, vom Grundkörper 2 abnehmbar ist, so dass ein getrennter Transport des Laufs 4, insbesondere mit darin angeordneten Komponenten, möglich ist. Insbesondere sind in dem zumindest abschnittsweise transparent ausgeführten Abschnitt des Laufs 4 keine Funktionskomponenten des Waffensimulators 1 angeordnet, insbesondere die Laserstrahlquelle 12 und/oder die Strahlformungseinheit 15. Der Lauf 4 ist im Wesentlichen hohl und leer. Die Abnehmbarkeit des Laufs 4 ist dadurch vereinfacht. Insbesondere ist es nicht erforderlich, dass der Lauf 4 Funktions-Schnittstellen aufweist, um eine Signal- und/oder Energie-Verbindung zu ermöglichen. Die transparenten Abschnitte des Laufs 4 sind mit dem Grundkörper 2 abnehmbar ausgeführt. Insbesondere ist es möglich, die Laserstrahlquelle 12 mit der Strahlformungseinheit 15 von dem Lauf 4 zu trennen und insbesondere getrennt voneinander zu transportieren. Die Koppelbarkeit des transparenten Abschnitts des Laufs 4 gewährleistet auch einen vereinfachten Wechsel und/oder Ersatz reparaturbedürftiger oder schadhafter Funktionskomponenten. Der Wechsel ist insbesondere mit reduziertem Zeitaufwand möglich. Der Wechsel dauert höchstens 60s, insbesondere höchstens 40s und insbesondere höchstens 30s.

Es ist gewährleistet, dass die Treffergenauigkeit durch Demontieren und Wiederanmontieren der Funktionskomponenten nicht negativ beeinträchtigt ist. Die Wiederholabweichung bei einem Wechsel der Funktionskomponenten beträgt höchstens 30 mm bei einem 10 m entfernten Ziel, insbesondere höchstens 20 mm, insbesondere höchstens 10 mm, insbesondere höchstens 5 mm. Die Wiederholabweichung bezieht sich auf einen in eine Spanneinrichtung eingespannten Waffensimulator 1.

An dem Grundkörper 2 ist eine Statusanzeige 23 vorgesehen, über die der jeweilige Betriebszustand, also ein Status, des Waffensimulators 1 angezeigt wird. Die Statusanzeige 23 ist gemäß dem gezeigten Ausführungsbeispiel seitlich rechts an dem Mittelteil 56 aufgesetzt. Die gezeigte Statusanzeige 23 ist insbesondere für Linkshänder ausgeführt. Es ist auch denkbar, die Statusanzeige 23 seitlich links oder beidseitig am Mittelteil 56 anzuordnen.

Die Statusanzeige 23 weist ein optisches Element, insbesondere ein LED-Element 55 auf. Das LED-Element 55 ist entgegen der Strahlachse 13 dem Schützen zugewandt ausgerichtet. Das LED-Element 55 ist dem Griffelement 3 zugewandt. Das LED-Element 55 ist im Wesentlichen parallel zur Strahlachse 13 orientiert. Dadurch wird vermieden, dass der Schütze durch das LED-Element 55 vor der Schussabgabe geblendet oder beeinträchtigt wird. Das LED-Element 55 signalisiert dem Schützen, ob Schussbereitschaft vorliegt. Dadurch bekommt der Schütze unmittelbare Rückmeldung darüber, ob die Bereitschafts-Schalteinheit 18 ordnungsgemäß betätigt worden ist. Sofern dies nicht der Fall ist, kann der Schütze unmittelbar den Ladevorgang wiederholen. Die optische Statusanzeige 23 kann auch dazu genutzt werden, um beispielsweise einen Ladezustand der Energiequelle 16 zu visualisieren. Das LED-Element 55 kann beispielsweise mit unterschiedlicher Frequenz blinken oder dauerleuchten oder in verschiedenen Farben blinken bzw. leuchten, um unterschiedliche Ladezustände der Energiequelle 16 zu visualisieren.

Das LED-Element 55 kann beispielsweise auch zur Anzeige einer erfolgreichen Abgabe eines Laserschusses dienen. Es ist denkbar, dass das LED-Element 55, das in einer ersten Farbe die Schussbereitschaft für den Schützen signalisiert, nach erfolgter Schussabgabe, wenn durch die Mündung 14 emittierte Laserstrahlung, insbesondere mittels einer Monitordiode, erfasst worden ist, in eine zweite Farbe wechselt. Diese zweite Farbe signalisiert dem Schützen, dass Laserstrahlung, also ein Laserschuss, erfolgreich abgegeben worden ist.

Die Monitordiode kann insbesondere dafür genutzt werden, um die von der Laserstrahlquelle 12 abgegebene Laserstrahlleistung zu überwachen. Die Monitordiode ist insbesondere Bestandteil einer Laserstrahlleistungs-Überwachungseinheit. Wesentlich ist, dass die von dem Waffensimulator 1 abgegebene Laserleistung in einem vorgegebenen, einstellbaren Laserstrahlleistungsbereich liegt. Der Laserstrahlleistungsbereich wird definiert durch eine Maximalleistung, die nicht überschritten werden darf, damit der Waffensimulator 1 in einer bestimmten Laserstrahlschutzklasse, insbesondere der Laserstrahlschutzklasse 2, eingruppiert werden kann. Der zulässige Laserstrahlleistungsbereich ist ferner definiert durch eine Mindestleistung, die erforderlich ist, um einen abgegebenen Laserpuls mittels einer elektrischen Zieleinrichtung erfassen oder identifizieren zu können. Bei Unterschreiten der Mindestleistung ist eine Treffererkennung mit der elektrischen Zieleinrichtung nicht gewährleistet bzw. nicht möglich.

Die Monitordiode, die insbesondere mit der Steuerungseinheit 17 in Signalverbindung steht, erfasst die Laserstrahlleistung eines von der Laserstrahlquelle 12 abgegebenen Laserstrahlpulses. Sofern die erfasste Laserstrahlleistung die Mindestleistung unterschreitet, also außerhalb des Laserstrahlleitungsbereichs liegt, wird die Laserstrahlquelle 12 deaktiviert und eine Schussabgabe damit verhindert. Zusätzlich wird dem Schützen beispielsweise über die optische Statusanzeige 23 signalisiert, dass die Laserstrahlquelle zur Schussabgabe mangels Energieversorgung nicht geeignet ist. Insbesondere kann dazu eine Abschalteinheit dienen, die die Laserstrahlquelle 12 abschaltet. Das Abschalten der Laserstrahlquelle kann zusätzlich oder alternativ zu der Überwachung der Laserstrahlleistung mittels der Monitordiode auch in Abhängigkeit des Ladezustands der Energiequelle 16 dienen. Beispielsweise kann bei Unterschreiten einer Mindestspannung der Energiequelle 16 eine weitere Schussabgabe durch Abschalten der Laserstrahlquelle 12 verhindert werden.

Mit der Energiequelle 16 ist ein Energiesignalelement 24 verbunden. Das Energiesignalelement 24 dient zum akustischen Signalisieren einer Schussbereitschaft des Waffensimulators 1.

Im Grundkörper 2, insbesondere im Lauf 4, ist ein Schuss-Signalelement 25 vorgesehen, das Effekte einer Handfeuerwaffe bei der Schussabgabe simulieren soll. Das Schuss-Signalelement 25 weist mehrere Leuchtelemente 58 auf, die am Lauf 4 befestigt und insbesondere am Lauf 4 integriert sind und für eine festgelegte, insbesondere einstellbare, Dauer von beispielsweise 10 ms bis 3 s nach der Schussabgabe leuchten, um die an der Mündung 14 bei einer Handfeuerwaffe austretenden Gas- und/oder Feuerscheine zu simulieren. Die Leuchtelemente 58 des Schuss-Signalelements 25 signalisieren für Dritte, insbesondere für Zuschauer, die Schussabgabe. Die Leuchtelemente 58 können beispielsweise einen Lichtpuls vergleichbar einem Blitzlicht eines Fotoapparats abgeben, wobei der Lichtpuls insbesondere farblich, beispielsweise rot oder gelb, ausgeführt ist. Wesentlich ist, dass die Leuchtelemente 58 den Schützen bei der Schussabgabe nicht beeinträchtigen und insbesondere nicht blenden. Die Leuchtelemente 58 strahlen den Lichtpuls in senkrechter Richtung, insbesondere radial, zur Strahlachse 13 ab. Die Leuchtelemente 58 sind beidseitig an einer Außenseite des Laufs 4 angeordnet. Die Leuchtelemente 58 können auch im Laufunterzug 57 integriert sein. Zusätzlich oder alternativ können Leuchtelemente stirnseitig am Lauf 4 und/oder am Laufunterzug 57 im Bereich der Mündung 14 angeordnet sein, um ein Abstrahlen von Lichtpulsen im Wesentlichen parallel zur Strahlachse 13 zu ermöglichen. Dadurch können Zuschauer, die sich beispielsweise in der Nähe der Zieleinrichtungen aufhalten, die Schussabgabe optisch nachvollziehen. Die Leuchtelemente 58 sind insbesondere als LED-Elemente ausgeführt. Ein Leuchtelement 58 kann auch dadurch ausgeführt sein, dass ein transparentes Element, beispielsweise ein stabförmiges Element aus PMMA, von einem direkt nicht sichtbaren LED-Element mit Lichtstrahlung beaufschlagt wird. Über das transparente Element wird der Lichtpuls indirekt abgegeben. Das Leuchtelement 58 kann eine direkte oder indirekte Beleuchtung ermöglichen. Die Zeitverzögerung, mit der die Leuchtelemente nach Betätigung der Auslöseeinheit 9 zu leuchten beginnen, beträgt zwischen 1 ms und 15 ms.

Das Schuss-Signalelement 25 weist ferner einen elektromechanischen Schallerzeuger auf, der Ladegeräusche und Schussgeräusche simuliert. Der elektromechanische Schallerzeuger ist insbesondere als elektromechanischer Schallwandler ausgeführt, der an einer Gehäuseinnenwand des Laufs 4 angeordnet ist. Der Lauf 4 ist im Wesentlichen hohlförmig ausgeführt. Der Lauf 4 wirkt wie ein Lautsprechergehäuse. Der von dem elektromechanischen Schallwandler verursachte Schall wird sowohl in den Außenraum als auch in den Hohlraum des Laufs 4 abgestrahlt. Der Lauf 4 weist einen Durchbruch auf. Der Durchbruch ist am dem Lauf 4 derart angeordnet, dass das Schussgeräusch mit hohem Frequenzpegel wahrgenommen wird. Dies erfolgt dadurch, dass der für den Höreindruck wichtige Frequenzbereich des Schussgeräusches durch die Verstärkung der vom elektromechanischen Schallwandler direkt abgestrahlten Schallwelle durch die durch den Lauf 4 laufenden und aus dem Durchbruch austretenden Schallwellen mit hohem Pegel wahrnehmbar ist. Vorteilhaft ist es, wenn eine Laufstrecke der Schallwellen, die in den Hohlraum des Laufs 4 abgestrahlt werden, derart ausgewählt ist, dass die Wegdifferenz zwischen den direkt an die Umgebung abgestrahlten Schallwellen und den indirekt in den Lauf abgestrahlten Schallwellen der halben Wellenlänge der Schallwellen entspricht. Dadurch können sich die verschiedenen Schallwellen konstruktiv überlagern und ein verstärktes akustisches Signal ergeben. Der elektromechanische Schallwandler ermöglicht die Abgabe lauter Lade- und Schussgeräusche bei reduziertem Energieverbrauch. Die energieeffiziente Schallemission ist auf Frequenzen im Bereich zwischen 100 Hz und 500 Hz optimiert.

Alternativ oder zusätzlich ist ein Anschlagen eines elektromechanischen Hammers gegen einen Schwingkörper denkbar, der im gewünschten Frequenzbereich Eigenschwingungen aufweist. Dafür eignet sich beispielsweise ein metallisches Bauelement, insbesondere eine Platte, ein Stab, ein Rohr und/oder ein Freiformelement, das insbesondere eine andere Funktion des Waffensimulators 1 aufweisen kann, wie beispielsweise der Lauf 4 oder ein Wickelkern für eine Lichtleitfaser.

Der Waffensimulator 1 kann zusätzlich zu der Statusanzeige 23 ferner ein Bereitschafts-Signalelement 26 aufweisen, um die Schussbereitschaft des Waffensimulators 1 akustisch zu signalisieren. Dazu ist das Bereitschafts-Signalelement 26 mit der Abzugseinheit 8 in Signalverbindung. Gemäß dem gezeigten Ausführungsbeispiel ist das Bereitschafts-Signalelement 26 in die Abzugseinheit 8 integriert.

Nachfolgend wird der Aufbau der Laserstrahlquelle 12 mit der Strahlformungseinheit 15 näher erläutert. Die Laserstrahlquelle 12 ist als Laserdiode ausgeführt. Für die Strahlformung wird lediglich ein Zentralbereich der von der Laserdiode emittierten Laserstrahlung in eine Lichtleichtfaser 53 eingekoppelt. Zum Einkoppeln dient insbesondere eine asphärische Linse. Damit ist sichergestellt, dass am Ausgang der Lichtleitfaser 53, also dem der Laserdiode abgewandten Ende der Lichtleichtfaser 53, ein kreisrundes Strahlprofil ausgekoppelt wird. Das Strahlprofil ist im Wesentlichen scharf, d. h. die Randübergänge der Intensität I in Abhängigkeit des Strahlradius $r_L$, sind im Wesentlichen senkrecht. Das Kreisprofil ist aus dem ursprünglich größeren Strahlprofil mittels der asphärischen Linse und der Lichtleitfaser 53 "ausgeschnitten". Entlang der Ausbreitungsrichtung, also entlang der Strahlachse 13, ist allenfalls eine Vergrößerung des Strahlenspots mit der fundamentalen Divergenz der Lichtleitfaser 53 selbst zu erwarten. Die Brennweite des Laserspots kann mittels einer Projektionsoptik in Form eines Kollimators veränderlich eingestellt werden. Insbesondere ist es möglich, den Durchmesser des Kreisprofils des Laserspots bei einer festgelegten Zielentfernung einen gewünschten Kaliberdurchmesser abbildet. Typische Wettkampfprojektildurchmesser von beispielsweise 0,177 Zoll, 0,22 Zoll, 0,308 Zoll, 0,38 Zoll und/oder 0,45 Zoll können gezielt eingestellt werden. Entsprechend ist es auch möglich, durch die veränderlich einstellbare Brennweite den Laserspot auf eine vorher bekannte Zielentfernung von beispielsweise 10 m, 25 m, 50 m, 100 m oder 300 m anzupassen. Dadurch, dass der Kollimator eine veränderlich einstellbare Brennweite aufweist, können mit ein und demselben Waffensimulator 1 Schüsse unterschiedlicher Kaliber und/oder unterschiedlicher Wettkampfdistanzen abgebildet werden. Der Spotdurchmesser des Tophat-Profils des Laserstrahls beträgt insbesondere höchstens 20 mm, insbesondere höchstens 15 mm, insbesondere höchstens 10 mm, insbesondere höchstens 5 mm und insbesondere höchstens 2,5 mm. Der Laserstrahlradius $r_L$ beträgt die Hälfte des Spotdurchmessers, also entsprechend höchstens 10 mm, insbesondere höchstens 7,5 mm, insbesondere höchstens 5 mm, insbesondere höchstens 2,5 mm und insbesondere höchstens 1,25 mm. Es ist möglich, den Spotdurchmesser in Abhängigkeit der Entfernung des Zielobjekts und/oder in Abhängigkeit einer simulierten Waffe einzustellen.

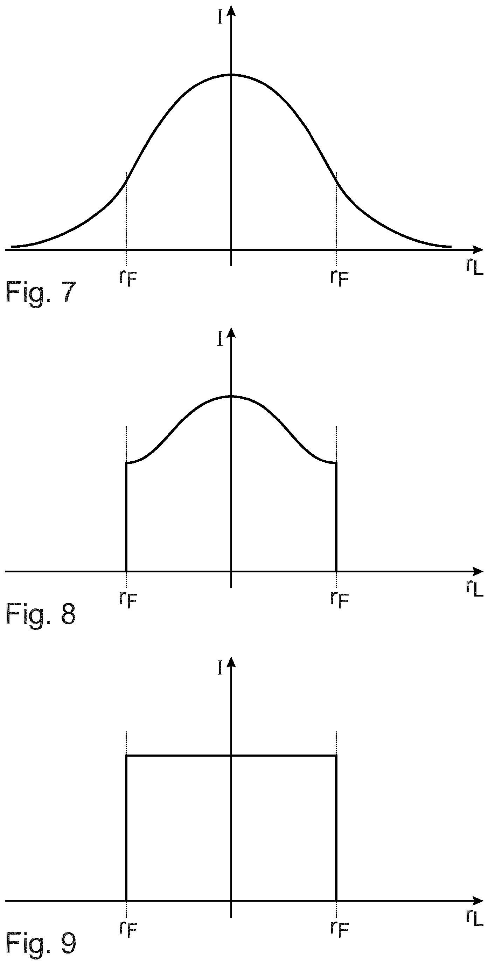

Eine weiterhin verbesserte Strahlqualität, also eine homogenere Intensitätsverteilung des Laserstrahls, kann dadurch verbessert werden, dass einzelne Strahlmoden innerhalb der Faser überlagert, also gemischt werden. Dies erfolgt dadurch, dass innerhalb der Lichtleitfaser 53 der Energieaustausch zwischen den verschiedenen Moden des Laserstrahls ermöglicht wird. Dadurch ist eine gezielte Homogenisierung der einzelnen Laserstrahlmoden möglich. Die verschiedenen Schritte der Laserstrahlformung sind in Fig. 7 bis 9 anhand schematischer Laserstrahlintensitätsprofile in Abhängigkeit des Laserstrahlradius $r_L$ gezeigt. In Fig. 7 ist das von der Laserdiode emittierte Laserstrahlintensitätsprofil gezeigt, das im Wesentlichen eine Gaußverteilung aufweist. Fig. 8 zeigt das mittels der asphärischen Linse in die Lichtleitfaser ausgeschnittene und eingekoppelte Intensitätsprofil, das an den Rändern, die durch den Faserradius $r_F$ vorgegeben sind, scharf abgeschnitten ist. Die Intensitätsverteilung in Abhängigkeit des Radius ist inhomogen. Eine Homogenisierung des Intensitätsprofils ist durch die Modenmischung erzeugt und in Fig. 9 symbolisch dargestellt.

Die Modenmischung ist besonders unkompliziert dadurch möglich, dass die Lichtleitfaser 53 in Form einer Helix, insbesondere auf einem zylinderförmigen Kern 54 aufgewickelt ist. Wesentlich ist, dass der Wickelradius mindestens dem Biegeradius der Lichtleitfaser entspricht, um die Lichtführungseigenschaften der Lichtleitfaser 53 nicht zu unterbinden und insbesondere um auszuschließen, dass unbeabsichtigt Laserstrahlung aus der Faser 53 austritt. Gleichzeitig sollte der Wickelradius nicht wesentlich über dem Zehnfachen des Biegeradius liegen, um eine hinreichende Effizienz der Modenmischung, also der Homogenisierung der Intensitätsverteilung, zu erreichen. Die mit der Wicklung verursachten Mikrobiegungen bilden Streuzentren, an welchen die einzelnen, in der Lichtleitfaser 53 ausbreitungsfähigen Laserstrahlmoden Energie austauschen können. Der Energieaustausch ermöglicht eine effektive Mischung der Laserstrahlmoden. Besonders vorteilhaft ist es, die auf einen Wickelkern 54 gewickelte Lichtleitfaser 53 in dem Lauf 4 des Waffensimulators 1 zu integrieren, wobei der Außenradius des Laufs bei der gezeigten Laserpistole kleiner ist als 15 mm und insbesondere kleiner ist als 12 mm.

Es wurde gefunden, dass unter Berücksichtigung des Helix-Steigungswinkels k ein effektiver Faserbiegeradius eingestellt werden kann, der größer ist als der minimale Faserbiegeradius. Dadurch ist es möglich, dass die Lichtleitfaser 53 auf einen besonders kleinen Wickelkern 54 aufwickelbar ist, dessen Wickelradius insbesondere kleiner ist als der minimale Biegeradius der Faser, ohne dass die Lichtführung der Faser negativ beeinträchtigt wird. Die Steigung k der Helix-Wicklung ergibt sich zu k = h/2 ·r$_w$·Π.h entspricht der Höhe einer einzigen Wicklung. Der korrespondierende Steigungswinkel β ergibt sich aus: tanβ = k. r$_w$ entspricht dem Wickelradius. Insbesondere wurde gefunden, dass sich der effektive Biegeradius r$_{B,eff}$ der Lichtleitfaser 53 proportional zu $\sqrt{1 + k^2}$ vergrößert. Durch diese Erkenntnis ist es möglich, eine auf einem Wickelkern 54 gewickelte Lichtleitfaser 53 in dem Lauf 4 eines Waffensimulators 1 zu integrieren.

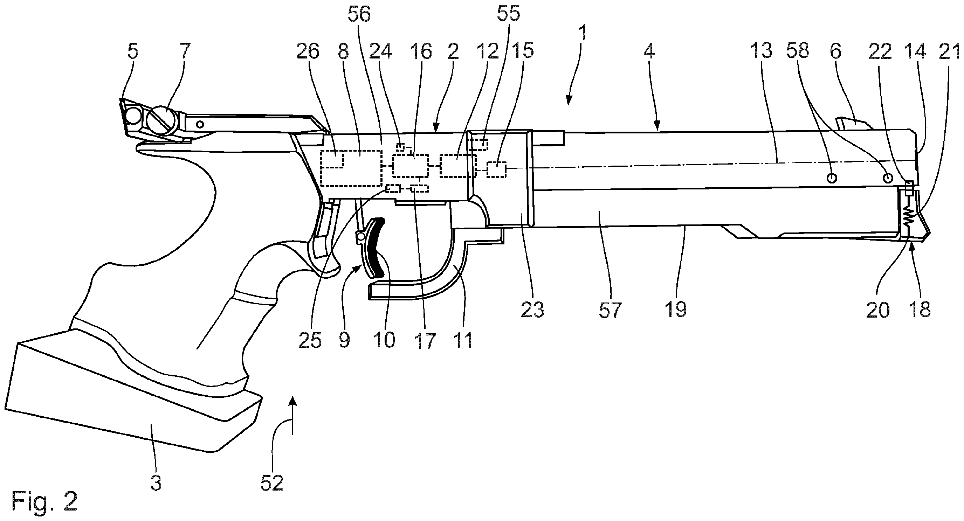

Insbesondere ist die Lichtleitfaser 53 als Kreiswicklung und/oder als Helixwicklung so ausgeführt und im Lauf 4 des Waffensimulators 1 integriert, dass bei einer Seitenansicht gemäß Fig. 1 oder Fig. 2, also mit Blickrichtung senkrecht zur Zylinderachse, die insbesondere parallel zur Strahlachse des emittierten Laserstrahls angeordnet ist, als nahezu transparent wahrgenommen wird. Dazu dient ein transparenter Kern in Form eines Stabes oder eines Rohres aus transparentem Material, insbesondere PMMA. Die einzelnen Wicklungen der Lichtleitfaser haben zueinander einen derart großen Abstand, dass die gesamte Baugruppe insgesamt als nahezu transparent wahrgenommen wird. Insbesondere ist die Lichtleitfaser 53 lediglich punktuell fixiert, insbesondere auf der Zylindermantelfläche des PMMA-Stabes.

Alternativ kann die Lichtleitfaser an wenigen Punkten an einer Innenseite des PMMA-Rohres fixiert sein. In diesem Fall handelt es sich um eine quasi kernfreie Wicklung. Dadurch, dass eine im Wesentlichen transparente Lichtleitfaserwicklung vorliegt, kann ein im Wesentlichen transparenter Lauf 4 gestaltet werden, der durch die bereits beschriebenen, zumindest abschnittsweise transparent ausgeführten Bereiche des Laufs 4 abgerundet wird.

Alternativ oder zusätzlich können Mikrobiegungen in die Lichtleitfasern mittels sogenannter Modenmischwerkzeuge in die Lichtleitfaser eingebracht werden. In diesem Fall können Lichtleitfasern nahezu linear, also makroskopisch nahezu ungebogen, geführt sein. Eine derartige Lichtleitfaserführung ist auch als Faserwicklung im Sinne der vorliegenden Erfindung zu verstehen.

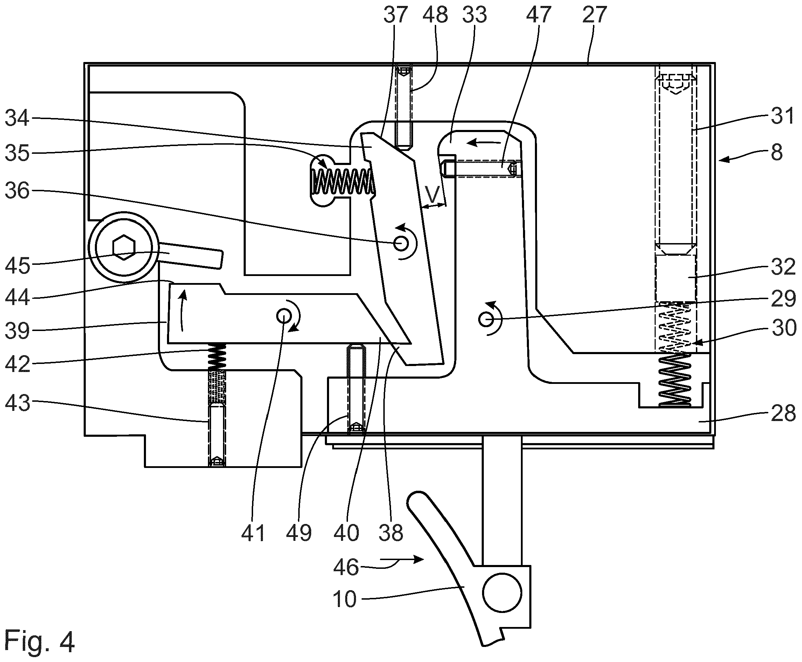

Nachfolgend wird anhand der Fig. 4 die selbstspannende mechanische Abzugseinheit 8 näher erläutert. Die Abzugseinheit 8 weist ein Gehäuse 27 auf, das an einer Unterseite zur Anbindung des Abzugszüngels 10 geöffnet ist. Der Abzugszüngel 10 ist starr mit einem Abzugshebel 28 verbunden, der um eine Abzugs-Drehachse 29 drehbar im Gehäuse 27 gelagert ist. Der Abzugshebel 28 ist mit einer Abzugshebel-Druckfeder 30 federbelastet im Gehäuse 27 gehalten. Die Abzugshebel-Druckfeder 30 kann über eine Abzugshebel-Druckfeder-Stellschraube 31 und einen Abzugshebel-Druckstift 32 einstellbar komprimiert werden, um eine Druckkraft auf den Abzugshebel 28 veränderlich einzustellen.

Entgegen der von der Abzugshebel-Druckfeder 30 verursachten Druckkraft kann der Abzugshebel 28 durch Betätigung des Abzugszüngels 10 um die Abzugshebel-Drehachse 29 gemäß Fig. 4 im Gegenuhrzeigersinn gedreht werden. Eine dem Abzugszüngel 10 gegenüberliegenden Kontaktnase 33, die einteilig am Abzugshebel 28 angeformt ist, kann ein Rasthebel 34 kontaktiert werden. Der Rasthebel 34 ist gegen eine Rasthebel-Druckfeder 35 federbeaufschlagt und um eine Rasthebel-Drehachse 36 drehbar im Gehäuse 27 angeordnet. Die Kontaktnase 33 wirkt mit einer Kontaktschräge 37 des Rasthebels 34 zusammen.

Bezogen auf die Rasthebel-Drehachse 36 gegenüberliegend der Kontaktschräge 37 weist der Rasthebel 34 eine Rasthebel-Klinke 38 auf, in die ein Schlaghebel 39 in der vorgespannten Anordnung mit einem Rastvorsprung 40 einrastet. Der Schlaghebel 39 ist um eine Schlaghebel-Drehachse 41 drehbar und mit einer von einer Schlagfeder 42 verursachten Schlagkraft beaufschlagt in dem Gehäuse 27 angeordnet. Die von der Schlagfeder 42 verursachte Schlagkraft ist mittels eines Schlagfeder-Stellelements 43 veränderlich einstellbar ausgeführt. An einem dem Rastvorsprung 40 bezüglich der Schlaghebel-Drehachse 41 gegenüberliegenden Ende weist der Schlaghebel 39 eine Schalterkontaktfläche 44 auf, die zum Anschlagen bzw. Kontaktieren eines elektrischen Schalters 45 dient. Durch Kontaktieren des Schalters 45 mit der Schalterkontaktfläche 44 des Schlaghebels 39 wird der Schalter 45 ausgelöst und damit ein erster Puls von der Laserstrahlquelle 12 initiiert. Dies erfolgt dadurch, dass der Abzugszüngel 10 in Auslöserichtung 46 betätigt wird. Der Schlaghebel 28 dreht im Gegenuhrzeigersinn um die Schlaghebel-Drehachse 29 und kontaktiert mit der Kontaktnase 33 den Rasthebel 34 an der Kontaktschräge 37. Dadurch wird der Rasthebel 37 im Gegenuhrzeigersinn um die Rasthebel-Drehachse 36 gedreht, wobei die Klinke 38 von dem Rastvorsprung 40 des Schlaghebels 39 entfernt wird. Sobald eine Überdeckung des Rastvorsprungs 40 durch die Klinke 38 nicht mehr gewährleistet ist, wie dies in Fig. 4 angedeutet ist, dreht der Schlaghebel 39 in Folge der Federkraftbeaufschlagung durch die Schlagfeder 42 im Uhrzeigersinn und bewirkt ein Kontaktieren des mechanischen Schalters 45 durch den Schlaghebel 39.

Ein Abzugshebel-Stellelement 47 und ein Rasthebel-Stellelement 48 dienen zum Einstellen eines Vorweges v eines Druckpunktes. Der Vorweg v zum Druckpunkt entspricht dem Weg, den der Abzugshebel 28 entgegen der Abzugshebel-Druckfeder 30 gedreht werden muss, bis er an der Kontaktschräge 37 des Rasthebels 2 anliegt. Mittels eines weiteren Spannweg-Einstellelements 49 kann der Spannweg des Schlaghebels 39 einstellbar festgelegt werden. Sämtliche Einstellelemente gemäß der mechanischen Abzugseinheit 8 sind als Stellschrauben ausgeführt, die in ein Innengewinde des Gehäuses 27 und/oder der verlagerbaren Komponenten einschraubbar sind.

Anstelle der mechanischen selbstspannenden Abzugseinheit 8 kann auch eine elektrische Abzugseinheit verwendet werden. Eine derartige elektrische Abzugseinheit ist beispielsweise von einer Druckluftwaffe vom Typ LP10E von Steyr Sport bekannt.

Wenn der Abzugszüngel 10 entlastet wird, drückt die von der Abzugshebel-Druckfeder 30 verursachte Druckkraft den Abzugshebel 28 wieder zurück in die Ausgangsposition. Dies gilt gleichermaßen für den Rasthebel 34 und den Schlaghebel 39, der in die Klinke 38 einrastet. Zusätzliche mechanische Energie zum Vorspannen ist nicht erforderlich.

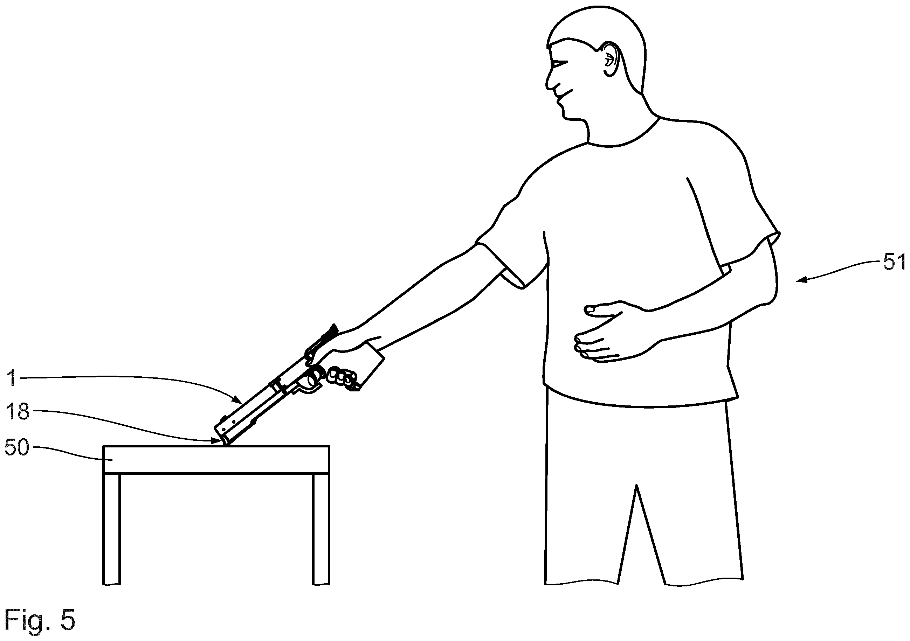

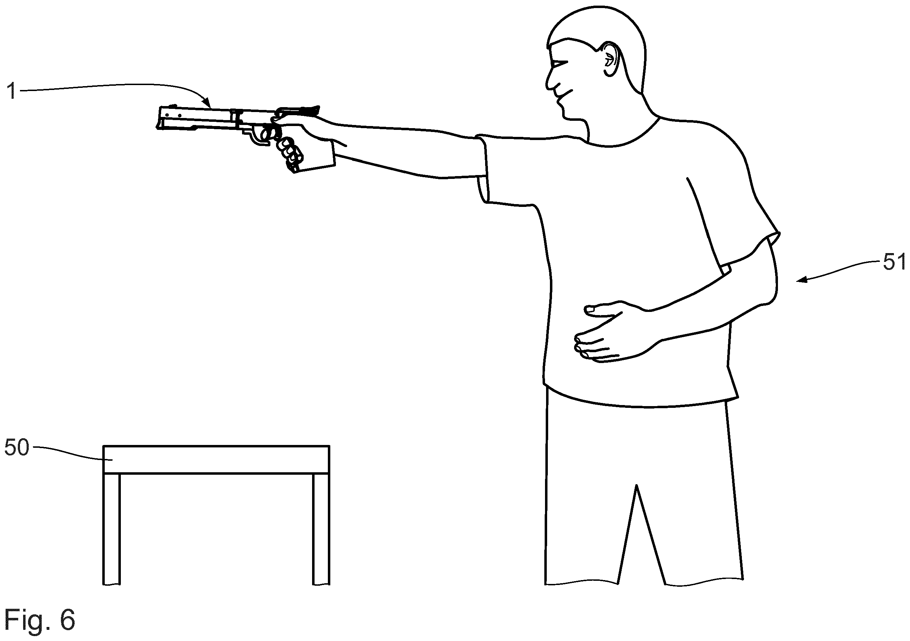

Nachfolgend wird die Funktionsweise des Waffensimulators 1 anhand der Fig. 5 und 6 für einen wie beispielsweise beim Modernen Fünfkampf typischen Ablauf näher erläutert. Das Reglement des Modernen Fünfkampfes erfordert vor der Schussabgabe ein Berühren eines Schießtisches 50 oder eines ähnlichen Gegenstands. Der Schütze 51 neigt den Schussarm mit der Schusshand, in der er den Waffensimulator 1 hält, nach unten, zu dem Schießtisch. Der Schussarm ist im Wesentlichen um 45° nach unten geneigt. Es ist auch denkbar, dass der Schussarm in einem Winkelbereich zwischen 15° und 75°, insbesondere zwischen 20° und 70°, insbesondere zwischen 25° und 65° und insbesondere zwischen 30° und 60° für den Ladevorgang nach unten neigt. Wesentlich ist, dass durch die Bewegung des Schussarms nach unten die Bereitschafts-Schalteinheit 18 betätigt wird. Dadurch, dass die Bereitschafts-Schalteinheit 18 im Bereich der Mündung 14, und insbesondere an der Außenseite des Grundkörpers 2 des Waffensimulators 1 angeordnet ist, kontaktiert der Ladehebel 20 der Bereitschafts-Schalteinheit 18 den Schießtisch 50. Der Ladehebel 20 wird entlang der Betätigungsrichtung mit dem erforderlichen Betätigungsweg von etwa 10 mm entgegen der Druckfeder 21 eingedrückt, bis der elektrische Schalter 22 auslöst und die Schussbereitschaft herstellt. Die Abzugseinheit 8 ist bereits zuvor in selbstspannender Weise aktiviert worden. Der Abzug ist vorgespannt. Der Waffensimulator 1 ist "geladen", also schussbereit. Eine weitere Ladebewegung durch den Schützen 51 ist nicht erforderlich. Insbesondere kann die freie Hand und/oder der freie Arm des Schützen 51 untätig bleiben. Eine Schussabgabe ist unmittelbar möglich, nachdem der Schütze 51 den Schussarm mit der Schusshand wieder in die Schießposition verlagert hat (vgl. Fig. 6). Der Schütze muss lediglich den Abzugszüngel 10 abdrücken. Die Verlagerung von der Ruheposition/Ladeposition in Fig. 5 in die Schießposition gemäß Fig. 6 ist durch ausschließliches Schwenken des Schussarms möglich. Die Schussabgabe kann schneller und mit höherer Genauigkeit erfolgen.

Durch die Schussabgabe werden dem Schützen 51 über das Schuss-Signalelement 25 optische und/oder akustische Signale vermittelt. Im nicht genutzten Zustand befindet sich der Waffensimulator 1 im Energiesparmodus, einem sogenannten Stand-by-Betrieb. Im Energiesparmodus ist die Laserstrahlquelle nicht mit Energie versorgt. Die Energieversorgung zur Laserstrahlquelle ist im Energiesparmodus unterbrochen. Der Energieverbrauch im Energiesparmodus ist gering und beträgt insbesondere weniger als 10 μW und insbesondere weniger als 1 μW. Während des Energiesparmodus wird der Schaltzustand der Bereitschafts-Schalteinheit 18 kontinuierlich und insbesondere mit einem niedrigen Takt von wenigen kHz abgefragt. Sobald die Bereitschafts-Schalteinheit 18 gemäß Fig. 5 betätigt wird, wird über die Steuerungseinheit 17 von dem Energiesparmodus in den Einzelschussmodus gewechselt. In dem Einzelschussmodus ist der Waffensimulator 1 schussbereit. Dazu steht die Steuerungseinheit mit der Laserstrahlquelle 12 in Signalverbindung. Der Übergang von dem Energiesparmodus, quasi einem Schlafzustand, in die Schussbereitschaft beträgt wenige Bruchteile einer Sekunde, die der Schütze 51 selbst nicht als Verzögerung wahrnimmt. Diese Zeitdauer wird auch als Aufwachzeit bezeichnet. Durch Auslösen der Auslöseeinheit 9, also durch Betätigung des Abzugszüngels 10, wird ein Laserschuss ausgelöst und ein entsprechender Laserstrahlpuls vom Waffensimulator 1 abgegeben.

Nach Schussabgabe erfolgt ein Umschalten von dem Einzelschussmodus in den Energiesparmodus, insbesondere nach Abschluss der Laserstrahlemission. Der Energieverbrauch des Waffensimulators 1 ist reduziert. Insbesondere ist gewährleistet, dass der Waffensimulator 1 im Wesentlichen immer, außer während der Schussabgabe, in einem Energiesparmodus betrieben wird. Der Waffensimulator 1 ist geeignet, um mindestens 20000 Laserschüsse oder mehr aus einer Batterieladung abzugeben. Erfahrungsgemäß kann der Waffensimulator 1 mindestens 12 Monate am Stück im Energiesparmodus mit einer Batterieladung betrieben werden. Die Gefahr von Fehlbedienungen und eines versehentlichen Entladens der Energiequelle, beispielsweise durch Nichtbetätigen eines Netzversorgungsschalters, sind ausgeschlossen.

Der laserbasierte Waffensimulator 1 ermöglicht darüber hinaus einen Mehrschussmodus, der dadurch eingestellt werden kann, dass der Abzugszüngel 10 gleichzeitig mit der Bereitschafts-Schalteinheit 18 betätigt wird. Das kann dadurch erfolgen, dass der Schütze 51 beim Absenken des Waffensimulators 1 gemäß Fig. 5 während des Kontaktierens des Schießtisches 50 zeitgleich den Abzugszüngel 10 aktiviert. Dadurch wird der Mehrschussmodus eingestellt. Das gleichzeitige Betätigen des Abzugszüngels 10 und der Bereitschafts-Schalteinheit 18 kann auch in anderer Weise erfolgen. Insbesondere kann die Bereitschafts-Schalteinheit 18 zum Wechsel in den Mehrschussmodus auch manuell betätigt werden, also manuell eingedrückt werden. Mehrschussmodus bedeutet, dass nach Abgabe eines Einzelschusses nicht automatisch in den Energiesparmodus zurückgewechselt wird, sondern für eine veränderlich einstellbare Zeitdauer mehrere Laserschüsse hintereinander abgegeben werden können, wobei eine Pause zwischen zwei Einzelschüssen veränderlich einstellbar mit 15 ms bis 2 s möglich sind. Die Dauer, für die der Mehrschussmodus aufrechterhalten bleibt, beträgt beispielsweise zwischen 10 s und 3 min. Während des Mehrschussmodus wird ein Quasi-Dauerlaserstrahl emittiert. Dem Schützen 51 wird dadurch eine einfachere Einstellung der Visierung ermöglicht. Beim Einschalten des Mehrschussmodus wird dem Schützen 51 der Ladezustand der Energiequelle 17 akustisch und/oder optisch signalisiert. Beispielsweise folgt auf einen ersten Signalton mit einer Frequenz zwischen 500 und 5000 Hz, der etwa 1 s schwingt, ein zweiter Signalton mit einer höheren oder niedrigeren Frequenz. Der Frequenzabstand ist ein Maß für den Ladezustand der Energiequelle. Je größer der Frequenzabstand, desto schlechter ist der Batteriezustand. Das Signaltonpaar kann mehrfach wiederholt werden, beispielsweise dreifach. Zusätzlich kann eine Variation der Lautstärke zur Signalisierung des Ladezustands der Energiequelle genutzt werden.

Der erfindungsgemäße Waffensimulator 1 weist eine Reihe von Vorteilen auf:
Der Waffensimulator 1 ist konform zum Regelwerk des Weltverbandes für modernen Fünfkampf (UIPM). Der Waffensimulator 1 kann einhändig, ausschließlich mit der Schießhand, betätigt werden, wenn ein Gegenstand wie beispielsweise ein Schießtisch bereitsteht. Durch Berührung des Schießtisches mit dem Waffensimulator 1 wird die Schießbereitschaft automatisch hergestellt. Eine zweite Hand ist für den Schießbetrieb nicht benötigt und kann in einer Ruheposition gehalten werden, um dem Körper des Schützen größtmögliche Ruhe zu verschaffen. Eine bislang für unüberwindbar gehaltene Beschränkung der Schießgeschwindigkeit, also Zeitdauer je Schuss, durch die Betätigung eines konventionellen Lade- bzw. Spannhebels bei Sport-, Luft- und/oder Laserpistolen ist aufgehoben.

Das durch konventionelles Laden erhöhte Risiko von Fehlschüssen, insbesondere verursacht durch Ladebewegungen des Ladearms des Schützen und der davon ausgelösten weiteren Körperbewegungen wie Neigung und/oder Rotation des Oberkörpers sowie insgesamt der Unruhe im Körper des Schützen und der mentalen Ablenkung, werden beseitigt.

Die Trefferwahrscheinlichkeit und Schusseffizienz werden verbessert.

Die im modernen Fünfkampf kaum zuverlässig beurteilbare Berührung des Schießtisches durch den Waffensimulator ist gewährleistet und somit als zwingende Voraussetzung für die Schussabgabe unabdingbar. Für die Athleten sinkt dadurch das Risiko einer Zeitstrafe. Die Schussabgabe ohne vorherige Schießtischberührung ist faktisch nicht möglich.

Der Waffensimulator 1 kann zur Ermittlung der Zeitpunkte der Betätigung von Bereitschafts-Schalteinheit und Auslöseeinheit zur genauen Schießzeitmessung genutzt werden. Dadurch ergibt sich ein besonderer Trainingsvorteil. Daraus ergibt sich insbesondere auch ein Dokumentationsvorteil bei der Durchführung eines Wettkampfes. Das tatsächliche zeitliche Geschehen bei der Schussabgabe und Laden des Waffensimulators 1 kann nachprüfbar nachvollzogen werden. Ein typischer Ladehebel ist entbehrlich. Der Ladehebel ist typischerweise ein Verschleißteil, der im modernen Fünfkampf aufgrund der extremem mechanischen Belastung regelmäßig getauscht werden muss. Das Risiko eines Materialausfalls während des Wettkampfes sinkt. Bei einer nichtmechanischen, also elektrischen Abzugseinheit entfällt ein Großteil der Verschleißkomponenten.

Der Waffensimulator 1 kann beidhändig ausgeführt werden. Es sind spezielle Waffensimulatoren für Linkshänder und für Rechtshänder gleichermaßen möglich. Auch manuell bedienbare Ladevorrichtungen sind für Rechtshänderschützen optimiert. Da derartige Ladevorrichtungen bei dem erfindungsgemäßen Waffensimulator nicht vorgesehen sind, herrschen diesbezüglich identische Voraussetzungen für Rechtshänder und Linkshänder.

Mit Ausnahme des Handgriffs sind Rechtshänder- und Linkshänder-Version des Waffensimulators identisch. Die Montage und Fertigung des Waffensimulators ist effizient möglich und dadurch kosteneffektiv. Eine Fehlanwendung des Simulators während des Wettbewerbs, insbesondere das Risiko einer Disqualifikation, weil der Waffensimulator beim Laden nicht in Richtung des Ziels ausgerichtet bleiben darf, ist ausgeschlossen, da ein Laden, also das Vorspannen nur dann erfolgt, wenn der Waffensimulator auf dem Schießtisch aufgesetzt wird. Der erforderliche Anpressdruck zur Herstellung der Schießbereitschaft auf dem Schießtisch ist veränderlich einstellbar. Insbesondere ist der Anpressdruck derart hoch eingestellt, dass eine versehentliche Herstellung der Schießbereitschaft durch Beschleunigen des Waffensimulators, insbesondere ohne Kontakt mit dem Schießtisch, zuverlässig unterbunden wird. Dieser Minimal-Anpressdruck kann durch die Rückstellkraft der Feder und die Masse des Ladehebels darüber hinaus in weiten Bereichen nach Vorlieben des Schützen individuell angepasst werden. Der Waffensimulator weist eine kompakte und robuste Bauweise auf. Vorstehende Teile sind vermieden. Alle Komponenten sind im Wesentlichen innerhalb des Gehäuses sicher angeordnet.

Eine elektronische Abzugseinheit weist weitere Vorteile auf:

Eine elektronische Abzugseinheit ist als Match-Druckpunktabzug mit höchster Güte und Lebensdauer herstellbar. Im Gegensatz zu einer mechanischen Abzugseinheit tritt bei der elektronischen Abzugseinheit im Wesentlichen kein Verschleiß beispielsweise durch Abrieb oder Aufrauungen von mechanisch miteinander zusammenwirkenden Komponenten auf. Ein derartiger Verschleiß erfordert typischerweise eine Nacharbeit der mechanischen Komponenten und/oder deren Austausch innerhalb regelmäßiger Wartungszyklen. Derartige Zyklen können für eine elektronische Abzugseinheit beispielsweise um mindestens das Doppelte, insbesondere mindestens das Fünffache und insbesondere mindestens das Zehnfache verlängert werden. Der Wartungsaufwand für die elektronische Abzugseinheit ist wesentlich reduziert.

Der bei mechanischen Abzugseinheiten systemimmanente Nachlaufweg ist reduziert und kann insbesondere bis auf Null reduziert werden, was die Schusspräzision positiv beeinflusst.

Die Abzugscharakteristik ist feiner und langzeitstabiler einstellbar als bei mechanischen Abzugsvorrichtungen.

Ein separater Schalter zum Ein- und Ausschalten der Stromversorgung ist entbehrlich, da die Betätigung der Bereitschafts-Schalteinheit die gesamte Elektronik einschaltet und nach entsprechender Ruhezeit wieder abschaltet.

Eine separate Energiequelle in Form einer Batterie ist entbehrlich, da sowohl die Laserstrahlquelle als auch die elektronische Abzugseinheit aus einer zentralen Energiequelle versorgt werden. Die Statusanzeige für die Zentralbatterie ermöglicht eine unmittelbare Anzeige der Anzahl der mit der elektronischen Abzugseinheit noch auslösbaren Schüsse. Der Stromverbrauch ist zusätzlich reduziert.

**Bezugszeichenliste**

| | |
|---|---|
| 1 | Waffensimulator |
| 2 | Grundkörper |
| 3 | Griffelement |
| 4 | Lauf |
| 5 | Kimme |
| 6 | Korn |
| 7 | Verstellrad |
| 8 | Abzugseinheit |
| 9 | Auslöseeinheit |
| 10 | Abzugszüngel |
| 11 | Schutzbügel |
| 12 | Laserstrahlquelle |
| 13 | Strahlachse |
| 14 | Mündung |
| 15 | Strahlformungseinheit |
| 16 | Energiequelle |
| 17 | Steuerungseinheit |
| 18 | Bereitschafts-Schalteinheit |
| 19 | Unterseite |
| 20 | Ladehebel |
| 21 | Druckfeder |
| 22 | elektrischer Schalter |
| 23 | Statusanzeige |
| 24 | Energie-Signalelement |
| 25 | Schuss-Signalelement |
| 26 | Bereitschafts-Signalelement |
| 27 | Gehäuse |
| 28 | Abzugshebel |
| 29 | Abzugshebel-Drehachse |
| 30 | Abzugshebel-Druckfeder |

| | |
|---|---|
| 31 | Abzugshebel-Druckfeder-Stellschraube |
| 32 | Abzugshebel-Druckstift |
| 33 | Kontaktnase |
| 34 | Rasthebel |
| 35 | Rasthebel-Druckfeder |
| 36 | Rasthebel-Drehachse |
| 37 | Kontaktschräge |
| 38 | Klinke |
| 39 | Schlaghebel |
| 40 | Rastvorsprung |
| 41 | Schlaghebel-Drehachse |
| 42 | Schlagfeder |
| 43 | Schlagfeder-Einstellelement |
| 44 | Schalterkontaktfläche |
| 45 | Schalter |
| 46 | Auslöserichtung |
| 47 | Abzugshebel-Einstellelement |
| 48 | Rasthebel-Einstellelement |
| 49 | Spannweg-Einstellelement |
| 50 | Schießtisch |
| 51 | Schütze |
| 52 | Betätigungsrichtung |
| 53 | Lichtleitfaser |
| 54 | Wickelkern |
| 55 | LED-Element |
| 56 | Mittelteil |
| 57 | Laufunterzug |
| 58 | Leuchtelement |

**Patentansprüche**

1. Laserbasierter Waffensimulator umfassend eine Laserbaugruppe umfassend

   a. eine Laserstrahlquelle (12) zum Erzeugen von Laserstrahlung,
   b. eine mit der Laserstrahlquelle (12) verbundene Strahlformungseinheit (15) mit

      i. einer Lichtleitfaser (53) zur Laserstrahlführung,
      ii. einer Einkopplungsvorrichtung zum Einkoppeln der Laserstrahlung in die Lichtleitfaser (53),
      iii. einer Homogenisierungsvorrichtung zum Homogenisieren der Laserstrahlung,

   **dadurch gekennzeichnet, dass**

      - die Lichtleitfaser (53) eine Monomode-Faser ist,
      - der Kerndurchmesser der Monomode-Faser kleiner ist als 10 $\mu$m.

2. Laserbasierter Waffensimulator gemäß Anspruch 1, **dadurch gekennzeichnet, dass** die Einkopplungsvorrichtung als asphärische Linse ausgeführt ist.

3. Laserbasierter Waffensimulator gemäß einem der vorstehenden Ansprüche, **dadurch gekennzeichnet, dass** die Strahlformungseinheit (15) eine Projektionsoptik, insbesondere in Form eines Kollimators, aufweist, wobei die Projektionsoptik insbesondere eine veränderlich einstellbare Brennweite aufweist.

4. Laserbasierter Waffensimulator gemäß einem der vorstehenden Ansprüche, **dadurch gekennzeichnet, dass** die Laserstrahlquelle (12) eine Laserdiode, einen lasergepumpten Faserlaser und/oder einen LEDgepumpten Faserlaser aufweist.

5. Laserbasierter Waffensimulator gemäß einem der vorstehenden Ansprüche, **dadurch gekennzeichnet, dass** die Homogenisierungsvorrichtung eine gewickelte Anordnung der Lichtleitfaser (53), insbesondere mittels eines Wickelelements (54) umfasst, wobei das Wickelelement (54) als Wickelkern oder als Wickelhülse ausgeführt ist.

6. Laserbasierter Waffensimulator gemäß Anspruch 5, **dadurch gekennzeichnet, dass** die gewickelte Lichtleitfaser (53) an dem Wickelelement (54) zumindest punktuell befestigt ist.

7. Laserbasierter Waffensimulator gemäß Anspruch 5 oder 6, **dadurch gekennzeichnet, dass** das Wickelelement (54) aus einem transparenten Material, insbesondere Polymethylmethacrylat (PMMA), besteht.

8. Laserbasierter Waffensimulator gemäß einem der Ansprüche 5 bis 7, **dadurch gekennzeichnet, dass** die Lichtleitfaser (53) mit einem Steigungswinkel (k) schraubenlinienförmig gewickelt ist, wobei insbesondere ein effektiver Faserbiegeradius vorgesehen ist, der größer ist als ein minimaler Faserbiegeradius.

9. Laserbasierter Waffensimulator gemäß einem der vorstehenden Ansprüche, **gekennzeichnet durch** einen die Lichtleitfaser (53) umgebenden Schutzmantel.

10. Laserbasierter Waffensimulator gemäß einem der vorstehenden Ansprüche, **gekennzeichnet durch** einen Schutzschalter zum Unterbrechen der Energiezufuhr von einer Energiequelle (16) zur Laserstrahlquelle (12), insbesondere bei Öffnen eines Grundkörpers (2) des Waffensimulators (1).

11. Laserbasierter Waffensimulator gemäß einem der vorstehenden Ansprüche, **gekennzeichnet durch** eine Selbstzerstörungsschutzvorrichtung zum Selbstzerstören der Laserstrahlquelle (12) durch einen Überspannungsimpuls bei einer, insbesondere definierten und/oder überprüfbaren, Fehlfunktion der Laserstrahlquelle (12).

12. Laserbasierter Waffensimulator gemäß einem der vorstehenden Ansprüche, **dadurch gekennzeichnet, dass** die Laserstrahlquelle (12) und die Strahlformungseinheit (15) miteinander unlösbar verbunden sind.

13. Laserbasierter Waffensimulator gemäß einem der vorstehenden Ansprüche, **gekennzeichnet durch** eine Trennschutzvorrichtung zum Schutz der Verbindung der Laserstrahlquelle (12) mit der Strahlformungseinheit (15), insbesondere mit der Lichtleitfaser (53), gegen unbeabsichtigtes Trennen.

14. Laserbasierter Waffensimulator gemäß einem der vorstehenden Ansprüche, **gekennzeichnet durch** einen Grundkörper (2), der zumindest bereichsweise, insbesondere im Bereich eines Laufs (4), transparent ausgeführt ist.

15. Laserbasierter Waffensimulator gemäß Anspruch 14, **dadurch gekennzeichnet, dass** eine Austrittsöffnung der Strahlformungseinheit (15) entlang der Strahlachse (13) im Bereich einer Auslöseeinheit (9), insbesondere im Bereich des Abzugszüngels (10), angeordnet ist, wobei insbesondere der entlang der Strahlachse (13) angeordnete Lauf (4) abnehmbar ausgeführt ist.

## Claims

1. Laser-based weapon simulator including a laser assembly including

   a. a laser beam source (12) for generating laser radiation,
   b. a beam forming unit (15) connected to the laser beam source (12) with

      i. an optical fibre (53) for laser beam guidance,
      ii. a coupling device for coupling the laser radiation into the optical fibre (53),
      iii. a homogenization device for homogenizing the laser radiation,

   **characterized in that**

      - the optical fibre (53) is a monomode fibre,
      - the core diameter of the monomode fibre is less than 10 $\mu$m.

2. Laser-based weapon simulator according to Claim 1, **characterized in that** the coupling device is designed as an aspherical lens.

3. Laser-based weapon simulator according to any one of the preceding claims, **characterized in that** the beam forming unit (15) has projection optics, in particular in the form of a collimator, wherein the projection optics in particular have a variably adjustable focal length.

4. Laser-based weapon simulator according to any one of the preceding claims, **characterized in that** the laser beam source (12) has a laser diode, a laser pumped fibre laser and/or a LED pumped fibre laser.

5. Laser-based weapon simulator according to any one of the preceding claims, **characterized in that** the homogenization device comprises a wound arrangement of the optical fibre (53), in particular by means of a winding element (54), wherein the winding element (54) is designed as a winding core or as a winding sleeve.

6. Laser-based weapon simulator according to Claim 5, **characterized in that** the coiled fibre (53) is attached to the winding element (54) at least at some points.

7. Laser-based weapon simulator according to Claim 5 or 6, **characterized in that** the winding element (54) consists of a transparent material, in particular polymethyl methacrylate (PMMA).

8. Laser-based weapon simulator according to any one of Claims 5 to 7, **characterized in that** the optical fibre (53) is wound helically with a helix angle (k), wherein in particular an effective fibre bending radius is provided that is greater than a minimum fibre bending radius.

9. Laser-based weapon simulator according to any one of the preceding claims, **characterized by** a protective sheath surrounding the optical fibre (53) .

10. Laser-based weapon simulator according to any one of the preceding claims, **characterized by** a circuit breaker for interrupting the energy supply from an energy source (16) to the laser beam source (12), in particular when opening a base body (2) of the weapon simulator (1).

11. Laser-based weapon simulator according to any one of the preceding claims, **characterized by** a self-destruction protection device for self-destructing the laser beam source (12) by means of a surge pulse in the event of a, in particular defined and/or verifiable, malfunction of the laser beam source (12) .

12. Laser-based weapon simulator according to any one of the preceding claims, **characterized in that** the laser beam source (12) and the beam forming unit (15) are irreversibly connected to each other.

13. Laser-based weapon simulator according to any one of the preceding claims, **characterized by** a separation protection device for the protection of the connection of the laser beam source (12) to the beam forming unit (15), in particular to the optical fibre (53), against unintentional separation.

14. Laser-based weapon simulator according to any one of the preceding claims, **characterized by** a basic body (2), which is transparently implemented, at least in some areas, in particular in the area of a barrel (4).

15. Laser-based weapon simulator according to Claim 14, **characterized in that** an outlet opening of the beam forming unit (15) is arranged along the beam axis (13) in the area of a trigger unit (9), in particular in the area of the trigger blade (10), wherein in particular the barrel (4) arranged along the beam axis (13) is implemented to be removable.

**Revendications**

1. Simulateur laser d'arme comprenant un ensemble laser comprenant

   a. une source de rayon laser (12) destinée à produire un rayonnement laser,
   b. une unité de formation de rayon (15) reliée à la source de rayon laser (12) avec

      i. une fibre optique (53) pour le guidage de rayon laser,
      ii. un dispositif d'injection pour l'injection du rayonnement laser dans la fibre optique (53),
      iii. un dispositif d'homogénéisation pour l'homogénéisation du rayonnement laser,

   **caractérisé en ce que**

   - la fibre optique (53) présente une fibre monomode,
   - le diamètre de cœur de la fibre monomode est inférieur à 10 $\mu$m.

2. Simulateur laser d'arme selon la revendication 1, **caractérisé en ce que** le dispositif d'injection est réalisé sous la forme d'une lentille asphérique.

3. Simulateur laser d'arme selon l'une quelconque des revendications précédentes, **caractérisé en ce que** l'unité de formation de rayon (15) présente une optique de projection, en particulier sous forme d'un collimateur, dans lequel l'optique de projection présente en particulier une distance focale réglable de manière variable.

**4.** Simulateur laser d'arme selon l'une quelconque des revendications précédentes, **caractérisé en ce que** la source de rayon laser (12) présente une diode laser, un laser à fibre soumis à un pompage laser et/ou un laser à fibre soumis à un pompage à DEL.

**5.** Simulateur laser d'arme selon l'une quelconque des revendications précédentes, **caractérisé en ce que** le dispositif d'homogénéisation comprend une disposition enroulée des fibres optiques (53), en particulier au moyen d'un élément d'enroulement (54), dans lequel l'élément d'enroulement (54) est réalisé sous la forme d'un noyau ou sous la forme d'un mandrin.

**6.** Simulateur laser d'arme selon la revendication 5, **caractérisé en ce que** la fibre optique (53) enroulée est fixée au moins ponctuellement sur l'élément d'enroulement (54).

**7.** Simulateur laser d'arme selon la revendication 5 ou 6, **caractérisé en ce que** l'élément d'enroulement (54) est constitué d'un matériau transparent, en particulier de polyméthacrylate de méthyle (PMMA).

**8.** Simulateur laser d'arme selon l'une quelconque des revendications 5 à 7, **caractérisé en ce que** la fibre optique (53) est enroulée de manière hélicoïdale avec un angle d'hélice (k), dans lequel en particulier un rayon de courbure de fibre effectif, qui est supérieur à un rayon de courbure de fibre minimal, est prévu.

**9.** Simulateur laser d'arme selon l'une quelconque des revendications précédentes, **caractérisé par** une enveloppe protectrice entourant la fibre optique (53).

**10.** Simulateur laser d'arme selon l'une quelconque des revendications précédentes, **caractérisé par** un disjoncteur pour interrompre l'amenée d'énergie d'une source d'énergie (16) à la source de rayon laser (12), en particulier lors de l'ouverture d'un corps de base (2) du simulateur d'arme (1).

**11.** Simulateur laser d'arme selon l'une quelconque des revendications précédentes, **caractérisé par** un dispositif de protection à destruction automatique pour la destruction automatique de la source de rayon laser (12) par une impulsion à surtension lors d'un dysfonctionnement, en particulier défini et/ou pouvant être contrôlé, de la source de rayon laser (12).

**12.** Simulateur laser d'arme selon l'une quelconque des revendications précédentes, **caractérisé en ce que** la source de rayon laser (12) et l'unité de formation de rayon (15) sont reliées l'une à l'autre de manière indétachable.

**13.** Simulateur laser d'arme selon l'une quelconque des revendications précédentes, **caractérisé par** un dispositif anti-séparation pour la protection de la liaison de la source de rayon laser (12) avec l'unité de formation de rayon (15), en particulier avec la fibre optique (53), contre une séparation involontaire.

**14.** Simulateur laser d'arme selon l'une quelconque des revendications précédentes, **caractérisé par** un corps de base (2), qui est réalisé de manière transparente au moins par endroits, en particulier dans la zone d'un canon (4).

**15.** Simulateur laser d'arme selon la revendication 14, **caractérisé en ce qu'**une ouverture de sortie de l'unité de formation de rayon (15) est disposée le long de l'axe de rayon (13) dans la zone d'une unité de déclenchement (9), en particulier dans la zone de la queue de détente (10), dans lequel en particulier le canon (4) disposé le long de l'axe de rayon (13) est réalisé de manière amovible.

Fig. 1

Fig. 2

Fig. 3

55 1
23 56 2 3 7 5
4

13 15 12 16 24 8 26

Fig. 4

EP 3 190 375 B1

Fig. 5

1

51

50

Fig. 6

Fig. 7

Fig. 8

Fig. 9

Fig. 10

EP 3 190 375 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2727841 A1
- WO 9924755 A1
- EP 0565843 A1

- DE 102007018354 A1
- US 4118105 A
- US 6662797 B1